(19) Europäisches Patentamt
European Patent Office
Office européen des brevets

(11) **EP 2 340 402 B1**

(12) **EUROPÄISCHE PATENTSCHRIFT**

(45) Veröffentlichungstag und Bekanntmachung des Hinweises auf die Patenterteilung:
**06.11.2013 Patentblatt 2013/45**

(21) Anmeldenummer: **09741184.7**

(22) Anmeldetag: **29.09.2009**

(51) Int Cl.:
**F24J 2/14** (2006.01)

(86) Internationale Anmeldenummer:
**PCT/CH2009/000310**

(87) Internationale Veröffentlichungsnummer:
**WO 2010/037243 (08.04.2010 Gazette 2010/14)**

(54) **SONNENKOLLEKTOR**

SOLAR COLLECTOR

COLLECTEUR SOLAIRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.09.2008 CH 15592008**
**01.10.2008 CH 15662008**

(43) Veröffentlichungstag der Anmeldung:
**06.07.2011 Patentblatt 2011/27**

(73) Patentinhaber: **Airlight Energy IP SA**
**6710 Biasca (CH)**

(72) Erfinder: **PEDRETTI, Andrea**
**CH-6948 Porza (CH)**

(74) Vertreter: **Stump, Beat**
**Stump + Partner**
**Patentanwälte AG**
**Dufourstrasse 116**
**CH-8008 Zürich (CH)**

(56) Entgegenhaltungen:
**WO-A-82/00366        WO-A-2008/037108**
**DD-A1- 117 107        DE-A1- 2 631 551**
**DE-C1- 4 413 056        JP-A- 2003 074 988**
**US-A- 4 543 945        US-A- 5 365 920**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft einen Strahlungskollektor nach Anspruch 1.

Strahlungskollektoren bzw. Konzentratoren der genannten Art finden u.a. in Sonnenkraftwerken Anwendung.

Bis heute ist es wegen der noch nicht überwundenen Nachteile der Fotovoltalk nicht gelungen, Solarstrom in Anwendung dieser Technologie in annähernd kostendeckender Art zu erzeugen. Solarthermische Kraftwerke hingegen produzieren schon seit einiger Zeit Strom im industriellen Massstab zu Preisen, die - gegenüber der Fotovoltalk - nahe an den heute üblichen kommerziellen Preisen für in herkömmlicher Art erzeugten Strom liegen.

In Solarthermischen Kraftwerken wird die Strahlung der Sonne durch Kollektoren mit Hilfe des Konzentrators gespiegelt und gezielt auf einen Ort fokussiert, in welchem dadurch hohe Temperaturen entstehen. Die konzentrierte Wärme kann abgeführt und zum Betrieb von thermischen Kraftmaschinen wie Turbinen verwendet werden, die wiederum die Strom erzeugenden Generatoren antreiben.

Heute sind drei Grundformen von solarthermischen Kraftwerken im Einsatz: Dish-Sterling-Systeme, Solarturmkraftwerkssysteme und Parabolrinnensysteme.

Dish-Sterling-Systeme sind mit Paraboloidspiegeln ausgerüstet, die das Sonnenlicht auf einen Brennpunkt konzentrieren, wo ein Wärmeempfänger angeordnet ist. Die Spiegel sind zweiachsig drehbar gelagert, um dem aktuellen Sonnenstand nachgefahren werden zu können, und besitzen einen Durchmesser von wenigen Metern bis zu 10 m und mehr, womit dann Leistungen von bis zu 50 kW pro Modul erreicht werden. Ein beim Wärmeempfänger installierter Sterlingmotor wandelt die thermische Energie direkt in mechanische Arbeit um, durch die wiederum Strom erzeugt wird.

An dieser Stelle sei auf die in US-PS 4,543,945 dargestellten Ausführungsformen und die installierten Anlagen Distal und Eurodish der EU in Spanien verwiesen.

US-PS 4,543,945 zeigt in einer ersten Ausführungsform ein Bauprinzip eines Kollektors mit einer Druckzelle, bestehend aus zwei runden, aufeinanderliegenden, randseitig verbundenen Membranen, wobei die obere transparent ausgebildet und die untere mit einer reflektierenden Schicht versehen ist. Im aufgeblasenen Zustand weist die Druckzelle Linsenform auf, wobei beide Membrane sphärisch gekrümmt sind, mit der Folge, dass durch den transparenten Teil einfallende Strahlung durch die reflektierende Schicht In einen Bereich konzentriert wird, wo die Wärme abgenommen werden kann. In einer zweiten Ausführungsform wird an Stelle einer Druckzelle eine Unterdruckzelle verwendet, so dass die Membran mit der reflektierenden Schicht durch den Umgebungsdruck in sphärische Betriebsposition gebracht wird.

Die Anlagen Distal I und Distal II (1992 bzw. 1997 In Betrieb genommen) besitzen in einem Fachwerk gelagerte Konzentratoren, die als dehnbare Membrane auf dem Fachwerk aufgespannt sind und über eine Vakuumpumpe in Betriebsposition gehalten werden. Im Prinzip bildet das Fachwerk einen abgedichteten Hohlraum aus, der von der Membran überspannt wird - so wie dies bei der Membran der Trommel der Fall ist. Ober den durch die Vakuumpumpe erzeugten Unterdruck wird die den Konzentrator bildende Membran in das Fachwerk eingesogen (bzw. durch den Umgebungsdruck von aussen in das Fachwerk hineingedrückt) und nimmt dann im wesentlichen sphärische, aber nahe beim Paraboloid liegende Form - die Betriebsposition - ein. Distal II besitzt einen Spiegel- bzw. einen Konzentratordurchmesser von 8,5 m.

Die Verwendung einer Membran erfolgt mit dem Vorteil des geringen Gewichts, was wiederum zum geringeren Aufwand für das Fachwerk, auf dem die Membran aufgespannt wird, führt. Verglichen mit einem konventionellen, schweren und in der Herstellung aufwendigen Spiegel ist der Konstruktionsaufwand bemerkenswert geringer.

Solarturmkraftwerksysteme besitzen einen zentralen, erhöht (auf dem "Turm") montierten Absorber für das durch hunderte bis tausende von einzelnen Spiegeln mit zu ihm gespiegelte Sonnenlicht, womit die Strahlungsenergie der Sonne über die vielen Spiegel bzw. Konzentratoren im Absorber konzentriert und so Temperaturen bis zu 1300° C erreicht werden, was für den Wirkungsgrad der nachgeschalteten thermischen Maschinen (in der Regel ein Dampf- oder Fluidturbinenkraftwerk zur Stromerzeugung) günstig ist. Die Anlage "Solar two" In Kalifornien besitzt eine Leistung von mehreren MW.

Parabolrinnenkraftwerke besitzen Kollektoren In hoher Anzahl, die lange Konzentratoren mit geringer Querabmessung aufweisen, und damit nicht einen Brennpunkt, sondern eine Brennlinie besitzen. Diese Linienkonzentratoren besitzen heute eine Länge von 20 m bis zu 150 m. In der Brennlinie verläuft ein Absorberrohr für die konzentrierte Wärme (bis gegen 500°C), das diese zum Kraftwerk transportiert. Als Transportmedium kommt z.Bsp. Thermoöl oder überhitzter Wasserdampf In Frage.

Die 9 SEGS-Parabolrinnen-Kraftwerke in Südkalifornien produzieren zusammen eine Leistung von ca. 350 MW. Das 2007 ans Netz gegangene Kraftwerk "Nevada Solar One" besitzt Rinnenkollektoren mit 182'400 gekrümmten Spiegeln, die auf einer Fläche von 140 Hektar angeordnet sind und produziert 65 MW.

Ein weiteres Beispiel für ein Parabolrinnenkraftwerk ist Andasol 1 In Andalusien, mit einer Konzentratorfläche von 510'000 m$^2$ und 50 MW Leistung, wobei die Temperatur in den Absorberrohren ca. 400° C erreichen soll. Die Kosten beliefen sich auf dreihundert Millionen €. Ebenso Andasol 2, das 2009 ans Netz gehen soll, sowie das projektierte Andasol 3.

Oberschlagsmässig lässt sich festhalten, dass 40% oder mehr der Gesamtkosten für ein Solarkraftwerk auf die Kollektoren fallen, und dass der Wirkungsgrad des Kraftwerks entscheidend von der Qualität der Konzentratoren bestimmt wird.

In WO 2008/037108 werden nun Kollektoren, Insbesondere Rinnenkollektoren vorgeschlagen, deren Konzentratoren eine beschichtete Membran aufweisen. Sie sind für die industrielle Verwendung in der oben genannten Grössenordnung geeignet und realisieren die angestrebten Vorteile wie z.B. einfacher Aufbau und reduzierte Kosten.

Durch die unvermeidlich sphärisch gekrümmten Konzentratoren ergeben sich aber Wirkungsgradverluste gegenüber den konventionell gefertigten Spiegeln mit parabolischer Krümmung. Entsprechend soll in einer zusätzlichen Ausführungsform der Konzentrator abschnittsweise mit verschiedenem Druck beaufschlagt werden, damit dessen innere Zone gegenüber den anschliessenden äusseren Zonen stärker gekrümmt ist, womit sich eine Annäherung an die Parabelform ergibt, und so der Brennlinienbereich der theoretischen Brennlinie eines parabolischen Rinnenkollektors verbessert angenähert wird.

Die Trennung de Druckzonen erfolgt über Dichtlippen bzw. halbdurchlässige Schaumstoffstreifen, die eine "genügende Abdichtung" erlauben, ohne den Konzentrator "mechanisch zu beeinträchtigen". Durch den Kontakt der Dichtungsanordnung mit dem aus einer dünnen, grossflächigen Membran bestehenden Konzentrator ergibt sich unvermeidlich und nachteilig eine Verzerrung der sphärischen Membrankrümmung, was eine noch weiter verschlechterte Konzentration der Sonnenstrahlung zur Folge hat. Im Ergebnis sinkt dann der Wirkungsgrad mehr, als er durch die Zonen mit verschiedener Krümmung verbessert werden könnte.

Die offenbarte genügende Abdichtung, die eine mechanische Beeinträchtigung vermeiden soll, bedingt einen ständigen Leck-Luftstrom, so dass der Konzentrator auf der Dichtungsanordnung schwimmt (und so über seine gesamte Fläche gleich beansprucht ist), wobei der Leck-Luftstrom wiederum durch einen mitlaufenden Ventilator ständig ausgeglichen wird.

Tatsächlich kann aber die mechanische Beeinträchtigung auch ohne mechanischen Kontakt bereits durch die gewollt die Dichtungsanordnung durch- und überströmende Luft geschehen, so dass sich schliesslich Probleme ergeben, einen gemeinsamen Brennlinienbereich der verschieden gekrümmten Abschnitte wirklich zu erreichen und die nebeneinander gelegenen Druckzonen im richtigen Mass abzudichten.

Entsprechend ist es die Aufgabe der vorliegenden Erfindung, einen verbesserten Kollektor mit einer Konzentrator-Membran zu schaffen.

Diese Aufgabe wird durch einen Strahlungskollektor mit den Merkmalen des Anspruchs 1 gelöst.

Dadurch, dass die für die Krümmung der Konzentrator-Membran wirksame Linienspannung geändert wird, erfolgt eine mechanische Beeinflussung, die nicht zu unerwünschter Verzerrung, sondern zum gewünschten Ergebnis, nämlich verbesserter Konzentration der Sonnenstrahlung führt.

Ausführungsformen der vorliegenden Erfindung sind in den abhängigen Ansprüchen beschrieben.

Die Erfindung wird anhand der Figuren nachstehend näher erläutert.

**Es zeigt:**

Fig. 1 eine Ansicht eines Rinnenkollektor des Stands der Technik,

Fig. 2 schematisch einen Querschnitt durch die Druckzelle des Rinnenkollektors von Fig. 1,

Fig. 3 einen Querschnitt durch einen Rinnenkollektor von der Art des in Fig. 1 dargestellten, jedoch mit einem in zwei Abschnitte geteilten Konzentrator,

Fig. 4 schematisch einen Querschnitt durch die Druckzelle eines Rinenkollektors mit einer erfindungsgemässen Membrananordnung

Fig. 5 schematisch einen Querschnitt durch eine weitere Ausführungsform der erfindungsgemässen Membrananordnung

Fig. 6a und Fig. 6b je einen Querschnitt durch noch weitere Ausführungsformen, und

Fig. 7 ein betriebsfähiges Beispiel einer Membrananordnung mit vier Zonen

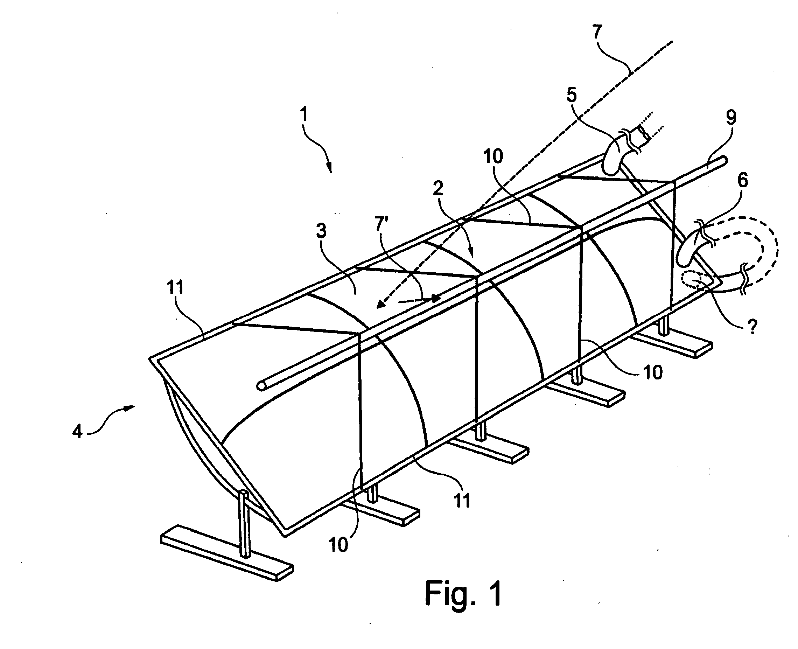

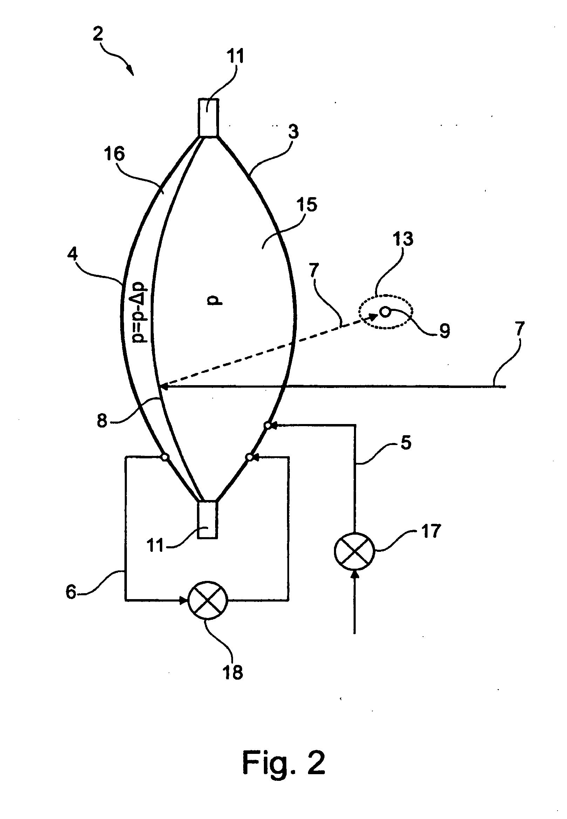

Figur 1 zeigt einen Rinnenkollektor 1 konventioneller Art mit einer Druckzelle 2, die die Gestalt eines Kissens aufweist und durch eine obere, flexible Membran 3 und eine in der Figur verdeckte, untere flexible Membran 4 gebildet wird. Ober einen Fluidkanal 5 wird die Druckzelle 2 unter Betriebsdruck gehalten, wobei weiter ein Fluidkanal 6 vorgesehen ist, dessen Funktion mit Bezug auf Figur 2 näher beschrieben ist.

Die Membran 3 ist für Sonnenstrahlen 7 durchlässig, die im inneren der Druckzelle 2 auf eine Konzentrator-Membran 8 (Figur 2) fallen und durch diese als Strahlen 7' reflektiert werden, hin zu einem Absorberrohr 9, in welchem ein Wärme transportierendes Medium zirkuliert und die durch den Kollektor konzentrierte Wärme abführt. Das Absorberrohr 9 wird durch Stützen 10 im Brennlinienbereich der Konzentrator-Membran 8 (Figur 2) gehalten.

Die Druckzelle 2 ist in einem Rahmen 11 aufgespannt, der wiederum dem Sonnenstand entsprechend verschwenkbar auf einem Gestell gelagert ist.

Figur 2 zeigt schematisch einen Querschnitt durch die Druckzelle 2 des Kollektors von Figur 1, zusammen mit den Fluidkanälen 5 und 6. Dargestellt ist die obere, für Sonnenstrahlen transparente Membran 3, die untere Membran 4 und die Konzentrator-Membran 8, die die Druckzelle 2 durchsetzt. Diese besitzt auf ihrer der Sonne zugewendeten Seite eine z.B. aufgedampfte reflektierende Beschichtung, so dass die Sonnenstrahlen 7 in einen Brennlinienbereich 13 reflektiert werden, wo sich das Absorberrohr 9 befindet.

Die Konzentrator-Membran 8 teilt die Druckzelle 2 in eine KonzentratorKammer 15 und eine Ausgleichskammer 16. Ober den Fluidkanal 5, gespiesen durch eine vorzugsweise als Ventilator 17 ausgebildete Fluidpumpe, wird die Konzentratorkammer 15 z.B. mit Luft unter Druck gesetzt. Dadurch strömt Luft via Fluidkanal 6 in die Ausgleichskammer 16. Eine vorzugsweise ebenfalls als Ventilator 18 ausgebildete weitere Fluidpumpe arbeitet dieser Strömungsrichtung entgegen, so dass sich die Ausgleichskammer 16 zwar mit Luft füllt, jedoch stets ein Druckgefälle zur Konzentratorkammer 15 herrscht. In der Konzentratorkammer herrscht dann der Druck p, in der Ausgleichskammer der etwas geringere Druck p - $\Delta$p.

Die Konzentratormembran 8 wird so mit dem Betriebsdruck $\Delta$p beaufschlagt, der sie betriebsfähiger, sphärisch gekrümmter Position hält.

Diese Anordnung besitzt den Vorteil, dass sie gegen Windangriff vergleichsweise unempfindlich ist und eine sehr dünne, damit qualitativ hoch stehende Konzentrator-Membran erlaubt (s. die WO 2008/037108). Sie besitzt aber den Nachteil, dass durch die sphärische Krümmung nicht eine Brennlinie, sondern ein Brennlinienbreich 13 erzeugt wird.

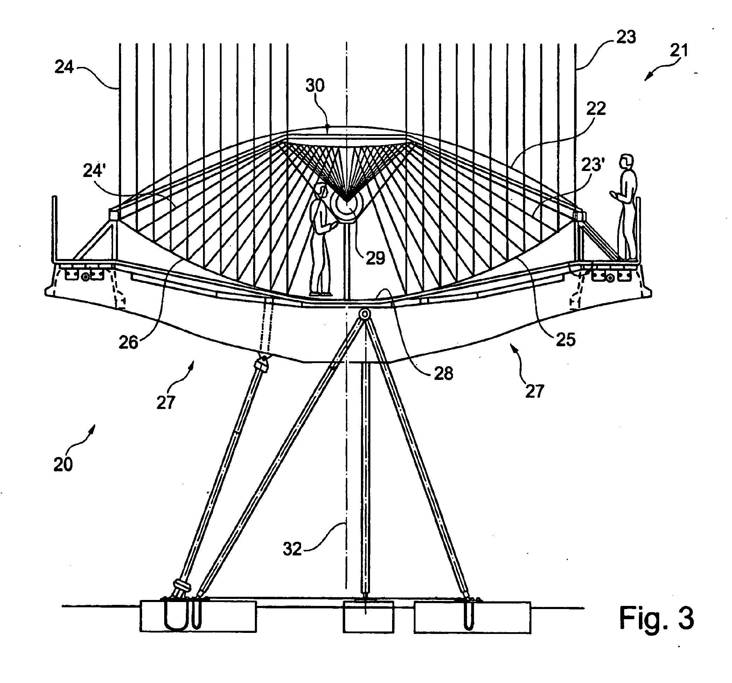

Figur 3 zeigt einen Querschnitt durch einen Rinnenkollektor 20 gemäss der noch unveröffentlichten Anmeldung CH 00462/08, mit einer Druckzelle 21 und deren oberer transparenten Membran 22, durch welche Sonnenstrahlung 23,24 einfällt und als Strahlen 23',24' reflektiert wird. Weiter ist eine aus zwei Abschnitten 25,26 bestehende Konzentrator-Membran 27 dargestellt, wobei die Abschnitte 25,26 von einander getrennt, aber zu einander bezüglich der strichpunktlerten Symmetrielinie 32 symmetrisch angeordnet sind. Der Mittelstreifen 28 ist begehbar z.B. für leichte Montage und Wartung der Ober ihm verlaufenden Absorberleitung 29 und trennt die Abschnitte 25,26 so weit von einander, dass der Schattenwurf des zweiteiligen Sekundärkonzentrators 30 die Abschnitte 25,26 der Konzentrator-Membran 27 nicht erreicht.

Diese Anordnung erlaubt, die Absorberleitung 29 in die Druckzelle 21 zu legen. Dies ist von Bedeutung, da eine konventionelle Absorberleitung 9, die im Freien verläuft (Figur 1), durch Wärmeabstrahlung und Kühlung durch Umgebungsluft (Wind) bis zu 100 W/m verliert, was bei einer Leitungslänge bis zu 100 km (oder mehr) einem Verlust von 10 MW entspricht. Jede Reduktion dieses Verlusts, z.B. durch Schutz vor Windkühlung, ist deshalb von Bedeutung und anzustreben. Ein weiterer Vorteil dieser Anordnung besteht darin, dass durch den Sekundärkonzentrator 30 der Brennlinienbereich der sphärisch gekrümmten Abschnitte 25,26 des Sekundärkonzentrators 30 verkleinert ist, so dass die Vorteile der innen absorbierenden Absorberleitung 29, wie sie in der Figur dargestellt ist, zum Tragen kommen.

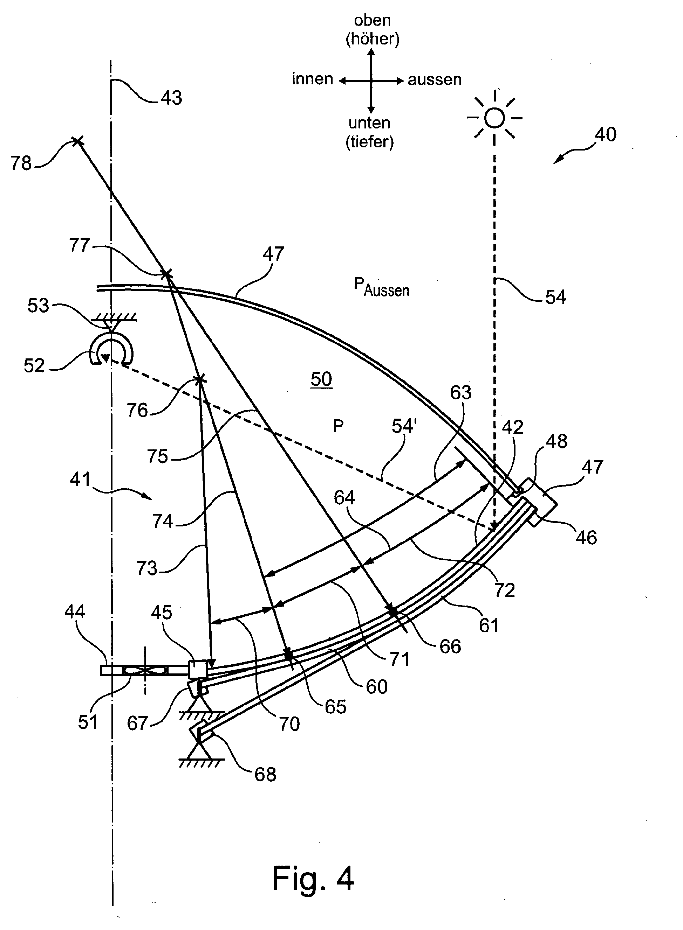

Figur 4 zeigt schematisch einen Querschnitt durch die Druckzelle 40 einer Ausführungsform des erfindungsgemäss ausgebildeten Rinnenkollektors, wobei die Figur zur Verdeutlichung der geometrischen Verhältnisse etwas überhöht dargestellt ist.

Der grundsätzliche Aufbau der Druckzelle entspricht demjenigen von Figur 3, d.h. der Konzentrator des Rinnenkollektors ist als Bestandteil der Druckzelle 40 ausgebildet und weist eine flexible (hier: mehrschichtige) Membrananordnung 41 auf, die bei der dargesteilten Ausführungsform In zwei zur Symmetrielinie 43 (die der Symmetrielinie 32 von Figur 3 entspricht) symmetrische Abschnitte unterteilt ist, welche über den Mittelstreifen 44 mit einander verbunden sind. Die nachstehende Beschreibung nimmt Bezug auf den In der Figur dargestellten rechten Abschnitt; es versteht sich von selbst, dass der linke, symmetrische Abschnitt gleich ausgebildet ist.

Die Membrananordnung 41 weist eine Konzentrator-Membran 42 auf, die mit einer zur Entlastung der Figur nicht dargestellten reflektierenden Schicht bedeckt ist.

Die Konzentrator-Membran 42 ist einerseits mit Hilfe einer Spannvorrichtung 45 am Mittelstreifen 44 und andererseits mit einer Spannvorrichtung 46 am Rahmen 47 des Rinnenkollektors betriebsfähig aufgespannt. Ersichtlich ist weiter eine obere, transparente Membran 47, die durch eine Spannvorrichtung 48 ebenfalls am Rahmen 47 befestigt ist.

Die transparente Membran 47 bildet zusammen mit der Membrananordnung 41 eine Konzentrator-Kammer 50, welche über die schematisch als Ventilator 51 dargestellte Fluidpumpe auf dem gegenüber dem Aussendruck $p_{Aussen}$ erhöhten Betriebsdruck p gehalten wird. Bevorzugt liegt p im Bereich von 30 bis 100 Pa, besonders bevorzugt bei 50 Pa. Unter solchen Betriebsdruckbedingungen ist die Membrananordnung 41 mit ihrer Konzentrator-Membran 42 betriebsfähig gekrümmt.

Weiter ist ein Innen-Absorberrohr 52 dargestellt, dessen Aufhängung 53 in der Druckzelle 40 schematisch angedeutet ist und vom Fachmann je nach der konkreten Ausbildung des Rinnenkollektors konzipiert werden kann.

Ein Sonnenstrahl 54 fällt von oben auf die Konzentrator-Membran 42 und wird als Strahl 54' In das Innere des Absorberrohrs 52 reflektiert.

In der Figur befindet sich die Sonne im Zenith, der Rinnenkollektor ist vertikal nach oben ausgerichtet. Entsprechend wird die Sonne als oben liegend bezeichnet, so dass sich z.B. der Mittelstreifen 44 gegenüber dem Absorberrohr 52 auf einer bestimmten Höhe, (weiter) unten oder tiefer befindet, während der Rahmen 47 gegenüber dem Mittelstreifen 44 höher und (weiter) aussen und der Mittelstreifen 44 gegenüber dem Rahmen 47 (weiter) innen liegt.

Die Figur zeigt eine erste weitere Membran 60 und eine zweite weitere Membran 61, wobei, gegeben durch die Betriebsdruckbedingungen und die Aufspannung der jeweiligen Membran 42,60,61 die Konzentrator-Membran 42 in einem ersten Bereich 63 auf der ersten weiteren Membran 60 aufliegt, und, durch diese hindurch, in einem zweiten Bereich 64 auch auf der zweiten weiteren Membran 61.

Der erste Bereich 63 erstreckt sich vom äusseren Ende der Konzentrator-Membran 42, d.h. hier vom Rahmen 47 nach innen, bis zu einer ersten, vorbestimmten Line 65.

Der zweite Bereich 64 erstreckt sich vom äusseren Ende der Konzentrator-Membran 42, d.h. hier vom Rahmen 47 nach innen, bis zu einer zweiten, vorbestimmten Une 66.

Die vorbestimmten Linien 65,66, in der Querschnittsdarstellung der Figur not-wendigerweise als Punkte eingezeichnet, erstrecken sich im Wesentlichen über die ganze Länge der Membrananordnung 41 (und damit des Rinnenkollektors) in konstanter Höhe.

Dabei ist die erste weitere Membran 60 gegen einen als erste Verankerung 67 ausgebildeten, ersten vorbestimmten Ort vorgespannt, der unterhalb des Inneren Endes der Konzentrator-Membran 42 bzw. unterhalb der Spannvorrichtung 45 liegt. Die zweite weitere Membran 61 ist gegen einen als zweite Verankerung 68 ausgebildeten zweiten vorbestimmten Ort vorgespannt, der entsprechend unterhalb des ersten vorbestimmten Orts, d.h. unter der ersten Verankerung 67 angeordnet ist.

Die erste und die zweite Verankerung 67,68 sind in der Figur nur schematisch angedeutet und können vom Fachmann je nach der konkreten Ausbildung des Rinnenkollektors konzipiert und am Rahmen oder Gestell des Rinnenkollektors geeignet angebracht werden.

Der erste und der zweite vorbestimmte Ort, d.h. die Lage der Verankerungen 67,68 werden so vorbestimmt, dass unter Betriebsdruckbedingungen und mit den Betriebs-Vorspannkräften die Konzentrator-Membran 42 und die erste sowie die zweite weitere Membran 60,61 wie beschrieben jeweils bis zur ersten bzw. zweiten vorbestimmten Linie 65,66 auf einander aufliegen.

Ein Verfahren, mit welchem die Position der ersten und zweiten vorbestimmten Linie 65,66 und die zugehörigen Vorspannkräfte bestimmt werden können, wird weiter unten näher beschrieben.

Durch die erste und zweite vorbestimmte Linie 65,66 wird die Konzentrator-Membran 42 ausgehend vom Mittelstreifen 44 in drei Zonen 70,71 und 72 geteilt, wobei jede Zone 70,71,72 grundsätzlich verzerrungsfrei sphärisch gekrümmt ist und einen zugeordneten Krümmungsradius ersten Krümmungsradius 73, zweiten Krümmungsradius 74 und dritten Krümmungsradius 75 mit jeweils ansteigender Länge aufweist. Die innerste Zone 70 ist am stärksten gekrümmt, die folgende, mittlere Zone 71 weniger, und die äussere Zone 72 am wenigsten.

Aus der Figur ist weiter ersichtlich, dass am Ort einer vorbestimmten Linie 65,66, in dem zwei benachbarte Zonen 70,71 und 71,72 aneinander stossen, die Krümmungsradien der jeweiligen benachbarten Zonen 70,71 bzw. 71, 72 zusammenfallen, und damit auch die Tangenten an diese Zonen am Ort der vorbestimmten Linie 65,66 zusammenfallen. Dadurch ergibt sich, dass die Krümmung der Konzentrator-Membran 42 über ihre ganze Ausdehnung, d.h. auch am Ort der Linien 65,66, ohne Knick, d.h. stetig differenzierbar verläuft. Dies ist für einen möglichst kleinen Brennlinienbereich, der der theoretischen Brennlinie eines parabelförmig gekrümmten Konzentratorabschnitts nahe kommt, Voraussetzung.

Die Krümmung einer druckbeaufschlagten Membran wird durch die dem Fachmann bekannte Beziehung $T_0 = p_0 R_0$ beschrieben. $T_0$ ist die am Rand der Membran durch deren Einspannung in diese eingeleitete Linienspannung (N/m, d.h. die pro m Membranlänge wirkende Kraft, wobei es auf die Dicke der Membran nicht ankommt). $p_0$ ist der auf der Membran lastende, deren sphärische Krümmung verursachende (Differenz)Druck und $R_0$ der resultierende Krümmungsradius der Membran. Bei gegebenem Druck $p_0$ kann also über die Variation der Linienspannung $T_0$, d.h. der Kraft, mit der die Membran vorgespannt oder abgespannt ist, die Länge des Krümmungsradius $R_0$ eingestellt werden.

In der Konzentrator-Membran herrscht nun die Basislinienspannung $T_B$, In der ersten weiteren Membran 60 deren Vorspannung entsprechend die erste U-nienspannung $T_1$ und in der zweiten weiteren Membran 61 deren Vorspannung entsprechend die zweite Linienspannung $T_2$. Damit ist erfindungsgemäss

- in ersten Zone 70 der Membrananordnung 41 die Linienspannung $Z_1 = T_B$
- in der der zweiten Zone 71 der Membrananordnung 41 die Linienspannung $Z_2 = T_B + T_1$ und
- in der dritten Zone 72 der Membrananordnung 41 die Linienspannung $Z_3 = T_B + T_1 + T_2$

mit der Folge, dass die Krümmungsradien 73 bis 75 in jeder nächsten Zone 70 bis 72 grösser sind als in der vorherigen. Dadurch wird erfindungsgemäss die Krümmung der Konzentrator-Membran 42 einer Parabel angenähert.

Erfindungsgemäss sind also die Krümmung und Ausdehnung der Zonen 70 bis 72 optimal zu bemessen und über den Ort der ersten und zweiten Verankerung 67,68 mit der entsprechenden Vorspannung in der betroffen Membran 60,61 zu realisieren, so dass schliesslich die Krümmung der Konzentrator-Membran 42 bestmöglichst derjenigen einer Parabel mit Brennpunkt am Ort des Absorberrohrs 52 angenähert ist, mit der Folge, dass die Ausdehnung des Brennlinienbereichs minimiert und der Wirkungsgrad des Rinnenkollektors maximiert werden kann.

Dies kann mit Hilfe der dem Fachmann bekannten arcspline Interpolation geschehen. Mit der arcspline Interpolation wird eine gegebene Kurve (hier: die anzunähernde Parabel) durch Kreisbogensegmente angenähert.

Vorliegend sind für die arcspline Interpolation als Ausgangslage der erste Punkt auf der anzunähernden Parabel mit seiner Tangente gegeben: es ist dies der Ort der Einspannvorrichtung 45, in welchem die Konzentrator-Membran 42 eine Steigung derart aufweisen muss, dass der dort vertikal einfallende Sonnenstrahl in das Absorberrohr 51 reflektiert wird. Ein weiterer Punkt auf der anzunähernden Parabel ist der Ort der Einspannvorrichtung 46. Schliesslich ist mit dem Ort des Absorberrohrs 52 die anzunähernde Parabel bestimmt. Dann sind auf dieser der Ausführungsform der Figur entsprechend zwei weitere Punkte anzunehmen (die hier der ersten und zweiten Linie 65,66 entsprechen).

Allgemein gilt dann, dass zwei der genannten, aufeinander folgenden Punkte die bekannten Koordinaten $x_l$ /$y_l$ bzw. $x_{l+1}$/ $y_{l+1}$, und das Zentrum des Kreisbogens, der durch diese beiden Punkte geht, die unbekannten Koordinaten $x_z$ / $y_z$ besitzt. Der zum Zentrum gehörende Krümmungsradius R ist unbekannt, während die Steigung m im ersten Punkt wiederum bekannt ist (Neigung der Konzentrator-Membran 42 am Ort der Einspannvorrichtung 45).

Dadurch ergeben sich die drei Gleichungen

$$\left(x_i - x_z\right)^2 + \left(y_i - y_z\right)^2 = R^2$$

$$\left(x_{i+1} - x_z\right)^2 + \left(y_{i+1} - y_z\right)^2 = R^2$$

$$m = \frac{x_i - x_z}{y_i - y_z}$$

mit den daraus bestimmbaren Unbekannten $x_z$, $y_z$ und R.

Ausgehend vom ersten Punkt am Ort der Einspannvorrichtung 45 kann also der erste Kreisbogen bestimmt werden, woraus wiederum die Steigung der Tangente  im zweiten Punkt $x_{l+1}$ / $y_{l+1}$ folgt, so dass mit dieser das Krümmungszentrum und der Krümmungsradius für den nächsten Kreisbogen folgt, was zum nächsten Punkt führt, einschliesslich dessen Tangente, und so fort, bis die gewünschten Punkte auf der Parabel durch Kreisbogensegmente mit einander verbunden sind und so die Parabel annähern.

Damit sind die Kreisbogen aber noch nicht optimal gelegt, da die Orte der ersten und zweiten Linie 65,66 vorerst willkürlich angenommen worden sind.

Z.B. der numerische Optimlerungsalgorithmus von Levenberg-Marquardt erlaubt, den Fehler zu minimieren, der hier in der Abweichung der drei Kreisbogen von der anzunähernden Parabel besteht. Der Fehler wird durch diesen Algorithmus minimiert, Indem die Steigung der ersten Tangente und die Koordinaten der nachfolgenden Punkte frei bewegt können, solange, bis durch deren verbesserte Lage die Summe der Höhenabwelchungen der Kreisbogen gegenüber der Parabel über die Methode der kleinsten Quadrate minimiert ist.

Im Ergebnis sind dann die Krümmungszentren 76 bis 78, die zugehörigen Krümmungsradien 73 bis 76 und die Lage der ersten und zweiten Linie 65, 66 bekannt, womit die anzunähernde Parabelform der Membrananordnung 41 optimiert durch die so definierten drei sphärisch gekrümmten Zonen 70 bis 72 realisiert ist.

Damit liegen sphärisch gekrümmte Zonen 70 bis 72 vor, deren Breite gegenüber derjenigen konventioneller Druckzellen erheblich kleiner ist, mit dem Vorteil, dass der jeweilige Brennlinienbereich entsprechend kleiner ausfällt. Zudem fallen die Brennlinienbereiche der Zone 70 bis 72 im Wesentlichen zusammen (z.B. da die Brennlinienbereiche aufgrund der verschiedenen Geometrie der Zonen 70 bis 72 nicht identisch sind, ist eine exakte Überdeckung nicht möglich). Eine Abweichung ist aufgrund der "nur" optimierten Annäherung an eine Parabelform nach wie vor unvermeidlich, ist aber so gering, dass die erfindungsgemässe Membrananordnung eine erhebliche Steigerung des Wirkungsgrades des Kollektors ermöglicht.

Die erste Verankerung 67 liegt auf der Tangente an die Membrananordnung am Ort der ersten Linie 65, die zweite Verankerung 68 liegt entsprechend auf der Tangente am Ort der zweiten Linie 66.

Mit dem vorgegebenen Druck p (vorzugsweise 50 Pa) in der KonzentratorKammer 50 und den nun bekannten Krümmungsradien 73 bis 75 und Lage der Linien 65, 66 kann der Fachmann die notwendigen Vorspannkräfte für jede Membran 42,60,61 anhand der Grund-Beziehung $T_0 = p_0R_0$ (s. oben) berechen.

Die notwendige Vorspannung für die Zone 70 (und damit die Vorspannkraft aus der Verankerung 45) ergibt sich aus dem vorgegebenen Druck p und dem nun bekannten ersten Krümmungsradius 73. Die notwendige Vorspannung für die Zone 71 analog; die Vorspannkraft der ersten Verankerung 67 entspricht der Differenz aus der Vorspannung für die Zone 71 minus die Vorspannkraft aus der Verankerung 45. Die entsprechende Rechnung gilt für die Zone 72.

Zusammenfassend sind über die erste und zweite weitere Membran 60,61 Mittel gegeben, um die im Betrieb der Membrananordnung 41 in dieser herrschende, für die Krümmung der Konzentrator-Membran 42 wirksame Linienspannung zu verändern. Die Linienspannung wird, über die Länge des Rinnenkollektors gesehen, den beiden vorbestimmten Linien 65,66 entlang verändert, derart, dass die durch die Linien 65,66 gegebenen Zonen 70 bis 72 der Membrananordnung 41 verschieden gekrümmt sind. Dabei ist die Krümmung auch am Ort der Linien 65,66 stetig differenzierbar und die Brennlinienbereiche der verschieden gekrümmten Zonen 70 bis 72 fallen im Wesentlichen zusammen.

Im Ergebnis kann der Fachmann erfindungsgemäss ausgehend von den lokalen Verhältnissen die Abmessungen des Rinnenkollektors, diejenigen der Druckzelle, der Lage des Absorberrohrs und die daraus folgende Konfiguration der erfindungsgemässen Membrananordnung bestimmen.

Ebenso kann der Fachmann erfindungsgemäss an Stelle von drei Zonen 70 bis 72 n solche Zonen, nämlich nur zwei oder vier oder mehr vorsehen und gemäss der oben geschilderten Berechnung auslegen, was von den konkreten Umständen wie Breite des Rinnenkollektors und gewünschter Optimierung des Brennlinienbereichs (z.B. in Abhängigkeit von der Art des vorgesehenen Absorberrohrs) abhängt. Ebenso ist die erfindungsgemässe Membrananordnung nicht an Rinnenkollektoren gebunden, sondern auch in runden Kollektoren, für z.B. Dish-Sterling Systeme mit den erfindungsgemässen Vorteilen verwendbar. Hier ist anzufügen, dass sich erfindungsgemäss auch kleine Systeme, z.B. bis 1 m Durchmesser oder noch weniger, erfindungsgemäss realisieren lassen. Bei kleinen Systemen können 2 Zonen für sehr gute Ergebnisse genügen.

Figur 4 zeigt eine Membrananordnung 41, die drei Schichten aufweist, nämlich die Konzentrator-Membran 42 sowie die erste und zweite weitere Membran 60,61 (wie erwähnt, könnten ohne weiteres auch nur zwei oder vier und mehr Schichten vorgesehen werden). Bei einer weiteren erfindungsgemässen Ausführungsform sind diese Membrane, soweit sie aufeinander aufliegen, mindestens teilweise mit einander verbunden oder einstückig ausgebildet, was die Elgenstabilität der Membrananordnung verbessern kann. Wiederum kann der Fachmann je nach der konkreten Ausbildung des Kollektors bestimmen, ob die Membrananordnung aus in einander gelegten Einzelmembranen, aus mit einander verbundenen Abschnitten der Einzelmembranen oder einer einstückigen Membran bestehen soll.

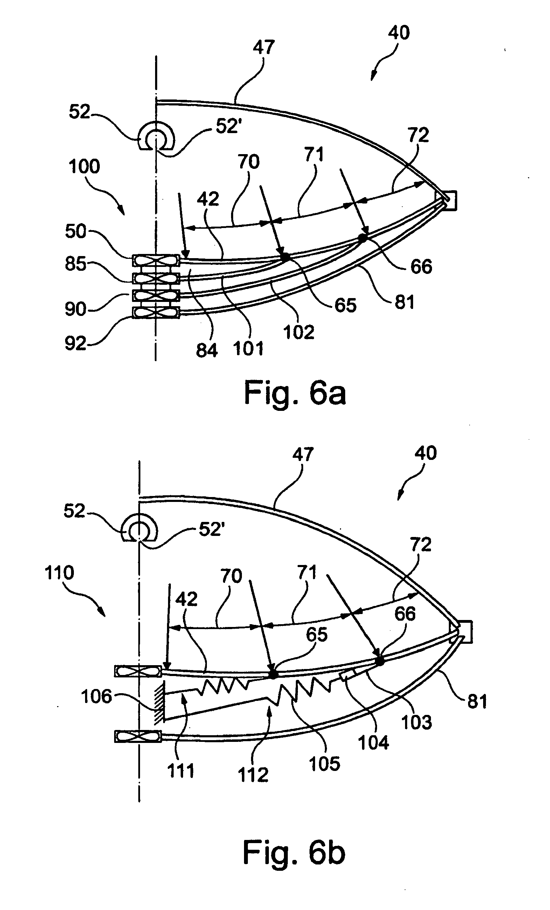

Ebenso ist es nicht zwingend, die erste und/oder zweite weitere Membran 60,61 nach der jeweiligen vorbestimmten Linie 65,66 nach innen weiterzuziehen, da sie die Konzentrator-Membran 42 nur bis zu diesen Linien 65,66 tragen. Die Verankerungen 67,68 können mithin näher bei den Linien 65,66 oder weiter von diesen weg angeordnet werden. Ebenso können die zwischen den Verankerungen 67,68 und den Linien 65,66 vorgesehenen Membranabschnitte (Figur 4) durch geeignete Spannmittel ersetzt werden (s, z.B. Figur 6b), jedoch derart, dass die erste und zweite weitere Membran 60,61 am Ort ihrer Linie 56,66 betriebsfähig (insbesondere über die Länge gleichmässig) gefasst und in der Richtung auf den zugeordneten vorbestimmten Ort mit der richtigen Vorspannkraft vorgespannt ist. In diesem Fall sind Spannmittel zum Aufspannen von mindestens einer weiteren Membran vorgesehen, die diese nach der ihr zugeordneten vorbestimmten Linie erfassen und sie gegen den ihr zugeordneten vorbestimmten Ort vorspannen.

Weiter kann der Fachmann je nach den konkreten Umständen vorsehen, In der Membrananordnung nur die Konzentrator-Membran mit ihrer reflektierenden Schicht vorzusehen und Spannmittel vorzusehen, die am Ort der vorbestimmten Linien 65,66 (Figur 4) mit der Konzentrator-Membran verbunden sind, also die in ihr herrschende Linienspannung erfindungsgemäss verändern (s. z.B. Figur 6a).

Die Elemente dieser verschiedenen Ausführungsformen können auch hier vom Fachmann je nach der konkreten Ausführung des Kollektors geeignet kombiniert werden.

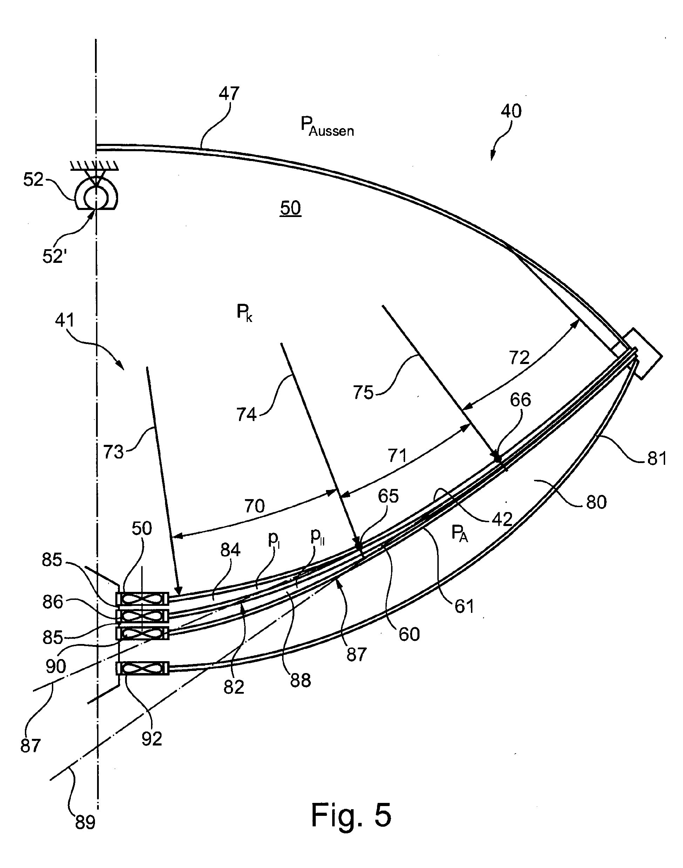

Figur 5 zeigt schematisch eine bevorzugte Ausführungsform der vorliegenden Erfindung, weiche die Vorteile der in Figur 2 und 3 gezeigten Kollektoren verbindet:

Einerseits teilt die Membrananordnung 41 die Druckzelle 40 In eine Konzentratorkammer 50 und eine Ausgleichskammer 80, mit dem Vorteil, dass dann wie in der WO 2008/037108 offenbart, die Konzentrator-Membran 42 wegen der geringen Betriebsdruckbelastung sehr dünn und mit gleichmässiger Oberfläche ausgebildet werden kann und damit für eine hochwirksam reflektierende Beschichtung besser geeignet ist oder diese erst ermöglicht. Zudem ermöglicht diese Ausführung, dass die Konzentrator-Membran 42 auch bei Windangriff in Ruhe bleibt, obschon sowohl die obere, transparente Membran 47 und auch die untere, flexible Membran 81 sich bei Windangriff verformen. Wie diejenigen von Figur 3 und Figur 4, ermöglicht es die Ausführungsform nach Figur 5, ebenfalls, durch die erfindungsgemässe Membrananordnung 41 die Strahlen in einem sehr kleinen Brennlinienbereich zu konzentrieren, was erlaubt, ein Absorberrohr 52 mit einer Inneren absorbierenden Oberfläche und vergleichsweise schmaler Eintrittsöffnung 52' für die Strahlen einzusetzen, wobei dieses weiter im Inneren der Druckzelle 40 angeordnet ist, so dass Wärmeverluste vermieden werden. Die erfindungsgemässe Membrananordnung 41 erlaubt somit unter anderem auch, auf einen Sekundärkonzentrator gemäss Figur 3 zu verzichten, ohne dass ein relevanter Wirkungsgradverlust hingenommen werden muss.

In der Figur dargestellt ist, wie in Figur 4, eine Membrananordnung 41, bestehend aus drei Schichten, nämlich einer Konzentrator-Membran 42, die mit einer reflektierenden Schicht bedeckt ist, einer ersten weiteren Membran 60 und einer zweiten weiteren Membran 61. Ersichtlich sind weiter die Krümmungsradien 73 bis 75 sowie die vorbestimmten Linien 65,66, welche die erste, zweite und dritte Zone 70 bis 72 definieren. Wiederum sind unter Betriebsdruckbedingungen die Zonen 70 bis 72 verschieden gekrümmt, wobei die Krümmung der Konzentrator-Membran 42 auch am Ort an einander angrenzender Zonen (d.h. am Ort der vorbestimmten Linien 65,66) stetig differenzierbar ist und die Brennlinienbereiche der verschieden gekrümmten Zonen am Ort des Absorberrohrs 52 (bzw. am Ort des Eintrittsschlitzes 52') im Wesentlichen zusammenfallen.

Die erste weitere Membran 60 erstreckt sich über die erste vorbestimmte Linie 65 hinaus und nach dieser über einen ersten weiteren Bereich 82 nach Innen, bis zu deren Verankerung (die zur Entlastung der Figur nicht weiter dargestellt ist). Der zwischen der Konzentrator-Membran 42 und dem ersten weiteren Bereich 82 der ersten weiteren Membran 60 eingeschlossene Raum ist fluiddicht als erste Druckkammer 84 ausgebildet, indem er innenseitig durch eine fluid-dichte Wand 85 abgeschlossen ist. Weiter sind als erster Ventilator 86 ausgebildete Mittel vorgesehen, um in der ersten Druckkammer 84 einen ersten Betriebsdruck $p_I$ aufrecht zu erhalten.

Dadurch, dass der erste weitere Bereich 82 der ersten weiteren Membran 60 unter Druck steht, ist er ebenfalls sphärisch gekrümmt. Entsprechend liegt seine Verankerung gegenüber derjenigen von Figur 4 weiter oben, näher beim Konzentratorventilator 50, mit der Folge, dass die Höhe der Ausglelchskammer 80 geringer ausfällt. Zum Vergleich der Höhen ist am Ort der ersten vorbestimmten Linie 65 die erste Tangente 87 an die Konzentrator-Membran 42 eingezeichnet, auf welcher die Verankerung der ersten weiteren Membran 60 liegen muss, wenn keine Druckkammer 84 vorgesehen ist (s. Figur 4).

Ebenso erstreckt sich die zweite weitere Membran 61 über die zweite vorbestimmte Linie 66 hinaus und nach dieser über einen zweiten weiteren Bereich 87 nach innen, bis zu deren Verankerung (die zur Entlastung der Figur nicht weiter dargestellt ist). Der zwischen der ersten weiteren Membran 60 und dem zweiten weiteren Bereich 87 eingeschlossene Raum ist fluiddicht als zweite Druckkammer 88 ausgebildet, indem er innenseitig durch eine fluiddichte Wand 85 abgeschlossen ist. Weiter sind als zweiter Ventilator 90 ausgebildete Mittel vorgesehen, um in der zweiten Druckkammer 88 einen zweiten Betriebsdruck $p_{II}$ In aufrecht zu erhalten.

Dadurch, dass der zweite weitere Bereich 87 der zweiten weiteren Membran 61 unter Druck steht, ist er ebenfalls sphärisch gekrümmt. Entsprechend liegt seine Verankerung gegenüber derjenigen von Figur 4 weiter oben, näher beim Basisventilator 50, mit der Folge, dass die Höhe der Ausglelchskammer 80 geringer ausfällt. Zum Vergleich der Höhen ist am Ort der zweiten vorbestimmten Linie 66 die zweite Tangente 89 an die Konzentrator-Membran 42 eingezeichnet, auf welcher die Verankerung der ersten weiteren Membran 60 liegen muss, wenn keine Druckkammer 84 vorgesehen ist (s. Figur 4).

Ohne die beschriebene erfindungsgemässe Weiterbildung der Membrananordnung 41 mit der ersten und/oder zweiten Druckkammer 84,88 ergäbe sich mithin für die Ausgleichskammer 80 eine z.B. für den Windangriff nachteilig grosse Höhe.

Bei einer weiteren Ausführungsform ist die erste weitere Membran 60 über zwischen der ersten vorbestimmten Linie 65 und der Wand 85 vorgesehene Spannmittel betriebsfähig vorgespannt, wobei diese Spannmittel nicht fluiddicht sind, mit der Folge, dass nur eine einzige Druckkammer vorliegt, nämlich zwischen der Konzentrator-Membran 61 und dem zweiten weiteren Bereich 87 der zweiten weiteren Membran 61. Je nach Auslegung der Membrananordnung 41, d.h. je nach Lage der vorbestimmten Linien 65, 66 ist der Vorteil der geringen Höhe der Ausgleichskammer 80 ebenfalls oder annähernd gewahrt. Der Fachmann kann geeignete Spannmittel nach den konkreten Verhältnissen bestimmen (s. dazu auch die Figuren 6a und 6b).

Der Betriebsdruck in der Konzentratorkammer 50, im der ersten Druckkammer 84, der zweiten Druckkammer 88 und in der Ausglelchskammer 80 wird über den Basisventilator 92 in der unteren flexiblen Membran 81, den zweiten Ventilator 90, den ersten Ventilator 85 und den Konzentrator-Ventilator 50 erzeugt und aufrecht erhalten. An Stelle der Ventilatoren 50,85,90,92 können auch andere geeignete Fluidpumpen eingesetzt werden.

Jeder Ventilator 50,85,90,92 fördert Luft In der gleichen Richtung: der Basisventilator 92 Ins Innere der Ausgleichskammer 80, der zweite Ventilator 85 ins Innere der zweiten Druckkammer 88, der erste Ventilator 85 ins Innere der ersten Druckkammer 84 und der Konzentrator-Ventilator 50 ins Innere der Konzentrator-Kammer 50.

Durch diese Förderung entsteht ein höherer Druck $p_A$ in der Ausgleichskammer 80 gegenüber dem Aussendruck $p_{Aussen}$, ein höherer Druck $p_{II}$ in der zweiten Druckkammer 88 gegenüber dem Druck $p_A$ der Ausgielchskammer 80, ein höherer Druck $p_I$ in der ersten Druckkammer 84 gegenüber dem Druck $p_{II}$ der zweiten Druckkammer 88 und ein höherer Druck $p_K$ in der Konzentratorkammer 50 gegenüber dem Druck $p_I$ in der ersten Druckkammer 84.

Dementsprechend lastet auf der ersten Zone 70 der Membrananordnung 41 der Betriebsdruck $p_K - p_I$, auf der zweiten Zone 71 der Betriebsdruck $p_K - p_{II}$ und auf der dritten Zone 72 der Betriebsdruck $p_K - p_A$.

Dadurch ergibt sich mit der in jeder Zone 70 bis 72 herrschenden Linienspannung die Krümmung der Membrananordnung 41 in jeder der Zonen 70 bis 72. Wiederum, d.h. wie in der Anordnung von Figur 4, ist die für die Krümmung der Zone 70 wirksame Linienspannung gleich der Vorspannung der Konzentrator-Membran 42, die für die Krümmung der Zone 71 wirksame Linienspannung gleich der Summe der Vorspannungen der Konzentrator-Membran 42 plus der ersten weiteren Membran 60 und die für die Krümmung der Zone 72 wirksame Linienspannung gleich der Summe der Vorspannungen der Konzentrator-Membran 42, plus der ersten weiteren Membran 60 plus der zweiten weiteren Membran 61.

Die benötigten Linienspannungen wiederum werden nach der weiter oben stehenden Beschreibung erhalten (Annäherung der sphärisch gekrümmten Zonen 70 bis 72 an die Parabel, zuerst durch die Arcspline-Interpolation, dann über die Minimierung der Fehler nach Levenberg-Marquardt, wobei der Ort der Absorberleitung, d.h. der Ort des Brennlinienbereichs zusammen mit den Einspannstellen der Konzentrator-Membran 42 die gegebenen Ausgangspunkte bilden).

Hier ist anzufügen, dass die notwendige Vorspannung zuerst In der Zone 72 durch den Betriebsdruck $p_K - p_A$ erhalten wird; für $p_A$ kann z.B. ein Wert zwischen 10 und 30 Pa, bevorzugt 27 Pa angenommen werden. Je nach der gewünschten Krümmung des zweiten weiteren Bereichs 87 (s, den nachstehenden Abschnitt) kann dann dessen Vorspannkraft in Verbindung mit dem zweiten Betriebsdruck gewählt werden. Dadurch ergibt sich die notwendige Summe der Vorspannkräfte für den ersten weiteren Bereich 82 plus der Konzentrator-Membran 42. Schliesslich kann dann analog je nach gewünschter Krümmung des ersten weiteren Bereichs 82 dessen Vorspannkraft in Verbindung mit dem ersten Betriebsdruck bestimmt werden, was dann zum Wert der Vorspannkraft für die Konzentrator-Membran 42 führt.

Die oben beschriebene Wahl von Vorspannkraft in Verbindung mit Betriebsdruck wird der Fachmann bevorzugt nach der gewünschten Höhe der Verankerung am Rahmen oder Gestell des Kollektors richten. Er wählt die jeweilige Vorspannkraft zusammen mit dem entsprechenden Betriebsdruck nach den vor Ort gegebenen Verhältnissen. Hier ist anzufügen, dass das erfindungsgemässe Konzept der Membrananordnung dank seiner Flexibilität in der Auslegung erlaubt, auf einfachste Weise den lokalen Gegebenheiten und Bedürfnissen Rechnung zu tragen, sei dies z.B. betreffend grosser oder kleiner Dimensionen, oder betreffend der konstruktiven Variation des Kollektors selbst.

Die oben beschriebene Methode der Dimensionierung der Zonen in der Membrananordnung besteht zusammenfassend darin, dass in einem ersten Schritt ausgehend von den Einspannstellen der Konzentrator-Membran im Kollektor und der Position eines Wärmeabsorbers oder eines Absorberrohrs eine durch die Konzentrator-Membran anzunähernde Parabelform definiert wird, wobei die Annäherung durch n+1, vorzugsweise 3 sphärisch gekrümmte Zonen der Konzentrator-Membran erreicht werden soll und dazu n vorbestimmte Linien auf der Parabelform angenommen werden. In einem zweiten Schritt wird über die Methode der Arcspline-Interpolation eine erste Ausbildung der n+1 sphärisch gekrümmten Zonen bestimmt. In einem dritten Schritt werden vorzugsweise mit der Methode von Levenberg-Marquardt unter freier Verschiebung der n vorbestimmten Linien die durch die Arcspline-Interpolation gegebenen Fehler in der ersten Ausbildung der n+1 sphärisch gekrümmten Zonen im Hinblick auf ihre Höhenabweichung gegenüber der anzunähernden Parabelform minimiert, so dass damit eine zweite Ausbildung der n+1 sphärisch gekrümmten Zonen bestimmt ist, die der anzunähernden Parabeiform verbessert angenähert ist.

Das bedeutet, dass die Zonen gemäss der zweiten Ausbildung betreffend der Höhenabweichung minimiert sind, jedoch bei nunmehr geringen Höhenfehlern immer noch grosse Unterschiede in der Steigung entsprechender Punkte auf den Kreisbogen der jeweiligen Zone zur anzunähernden Parabel bestehen können.

Einer bevorzugte Abwandlung der Methode zur Minimierung der Fehler besteht entsprechend darin, dass der numerische Algorithmus von Levenberg-Marquardt dahingehend modifiziert wird, dass die Fehlerkorrektur nicht nach der Höhenabweichung, sondern nach der Abweichung der Steigung entsprechender Punkte erfolgt. Solch eine Modifikation kann vom Fachmann vorgenommen oder vom Fachmann der Mathematik leicht bestimmt werden. Dies hat eine verbesserte Annäherung der Lage der Brennlinienbereiche der Zonen and den Brennpunkt bzw. die Brennlinie der anzunähernden Parabel zur Folge, da der reflektierte Sonnenstrahl durch fehlerhafte Steigung stärker defokussiert wird, als es bei einer fehlerhaften Höhe der Fall ist.

Dementsprechend werden bevorzugt im dritten Schritt die durch die Arcspline-Interpolation gegebenen Fehler in der ersten Ausbildung der n+1 sphärisch gekrümmten Zonen Im Hinblick auf ihre Steigung bezüglich der anzunähernden Parabelform minimiert, so das eine zweite Ausbildung der n+1 sphärisch gekrümmten Zonen bestimmt ist, die der anzunähernden Parabelform bezüglich der Lage ihrer Brennlinlenberelche verbessert angenähert ist.

Eine weitere, besonders bevorzugte Abwandlung der Methode zur Minimierung der Fehler besteht nun darin, dass der numerische Algorithmus von Levenberg-Marquardt dahingehend modifiziert wird, dass die Fehlerkorrektur zusätzüch nach der Entfernung des jeweiligen Punktes vom Brennpunkt bzw. der Brennlinie der anzunähernden Membran gewichtet wird, in dem die Entfernung des jeweiligen Punktes bestimmt und diese Entfernung als Gewichtungsfaktor Eingang In den Algorithmus findet, derart, dass bei der Optimierung die Lage, vorzugsweise aber die Steigung (s. oben), weiter entfernter Punkte (auf Kosten der näheren Punkte) genauer angenähert ist.

Denn ein von einem weiter weg liegenden Punkt mit falscher Steigung reflektierter Strahl ist stärker defokussiert als ein Strahl, der von einem näher beim Brennpunkt oder der Brennlinie gelegenem Punkt mit gleichem Steigungsfehler reflektiert wird.

Entsprechend werden dann im dritten Schritt die durch die Arcspline-Interpolation gegebenen Fehler in der ersten Ausbüdung der n+1 sphärisch gekrümmten Zonen im Hinblick auf ihre Entfernung vom Brennpunkt oder der Brennlinie der anzunähernden Parabelform gewichtet minimiert, mit bei weiterer Entfernung wachsendem Gewicht, so das eine zweite Ausbildung der n+1 sphärisch gekrümmten Zonen bestimmt ist, die der anzunähernden Parabelform bezüglich der minimalen Ausdehnung ihrer Brennlinienbereiche verbessert angenähert ist.

Eine optimale Fokussierung wird erfindungsgemäss durch die Kombination von einer Minimierung der Steigungsfehler mit der wachsenden Gewichtung bei wachsender Entfernung erzielt.

Dann werden im dritten Schritt die Minimierung der Fehler nach der Steigung und mit wachsender Entfernung vom Brennpunkt oder der Brennlinie der anzunähernden Parabelform stärker gewichtet minimiert, so dass eine zweite Ausbildung der n+1 sphärisch gekrümmten Zonen bestimmt ist, die der anzunähernden Parabelform bezüglich der Lage und der minimalen Ausdehnung ihrer Brennlinienbereiche verbessert angenähert ist.

Mit anderen Worten ist es dem Fachmann möglich, erfindungsgemäss anhand der im konkreten Fall gegebenen Position der Absorberleitung und der Einspannstellen für die Konzentrator-Membran die n vorbestimmten Linien zur Defiinition der Zonen, die zu jeder Zone gehörenden Krümmungsradien und dann die verschiedenen Betriebsdrucke zu berechnen.

Figur 6a zeigt schematisch eine weitere Ausführungsform der vorliegenden Erfindung. Dargestellt ist eine Druckzelle 40, deren Membrananordnung 100 eine Konzentrator-Membran 42 aufweist, in welche direkt, durch mechanische Verbindung, eine Vorspannkraft am Ort der vorbestimmten Linien 65,66 eingeleitet wird, so dass sich deren Krümmung erfindungsgemäss verändert. Im Gegensatz zu den Ausführungsformen der Figuren 4 und 5 liegen also bei dieser Membrananordnung 100 nicht mehr mehrere Membrane 42,60,61 im Verbund zonenweise aufeinander. Die Figur zeigt als erste Spannmembran 101 ausgebildete erste Spannmittel, die am Ort der ersten vorbestimmten Linie 65 mit der Konzentrator-Membran 42 betriebsfähig verbunden ist, und mit der Konzentrator-Membran 42 die erste Druckkammer 84 bildet, mit dem Vorteil des geringen Raumbedarfs (s, die Beschreibung zu Figur 5). Die betriebsfähige Verbindung zwischen der Spannmembran 101 und der Konzentrator-Membran 42 kann z.B. durch Verschweissung erfolgen.

Weiter dargestellt sind als zweite Spannmembran 102 ausgebildete zweite Spannmittel, die am Ort der zweiten vorbestimmten Linie 66 mit der Konzentrator-Membran 42 betriebsfähig verbunden ist, und mit der ersten Spannmembran 101 die zweite Druckkammer 88 bildet, mit dem Vorteil des geringen Raumbedarfs (s. die Beschreibung zu Figur 5). Die betriebsfähige Verbindung zwischen der zweiten Spannmembran 102 und der Konzentrator-Membran 42 kann ebenfalls z.B. durch Verschweissung erfolgen.

Figur 6b zeigt dem gegenüber schematisch eine Membrananordnung 110, wobei die ersten und zweiten Spannmittel als Federanordnungen 111 und 112 ausgebildet sind und die für die Krümmung der Konzentrator-Membran 42 wirksame Linienspannung in dieser verändern, wiederum, wie in allen Ausführungsformen, den vorbestimmten Linien 65,66 entlang. Ober einen vergleichsweise schmalen Membranstreifen 103, der mit der Konzentrator-Membran 42 verschweisst ist, kann ein steifer Träger 104 mit dieser verbunden werden, der wiederum durch einzelne Federanordnungen 105, die am Rahmen oder Gestell 106 des Kollektors angreifen, geeignet abgespannt ist. Damit wird am Ort der Linien 65,66 trotz von einander beabstandet angeordneter Federanordnungen 105 eine gleichmässige Linienkraft in die Konzentrator-Membran 42 eingeleitet.

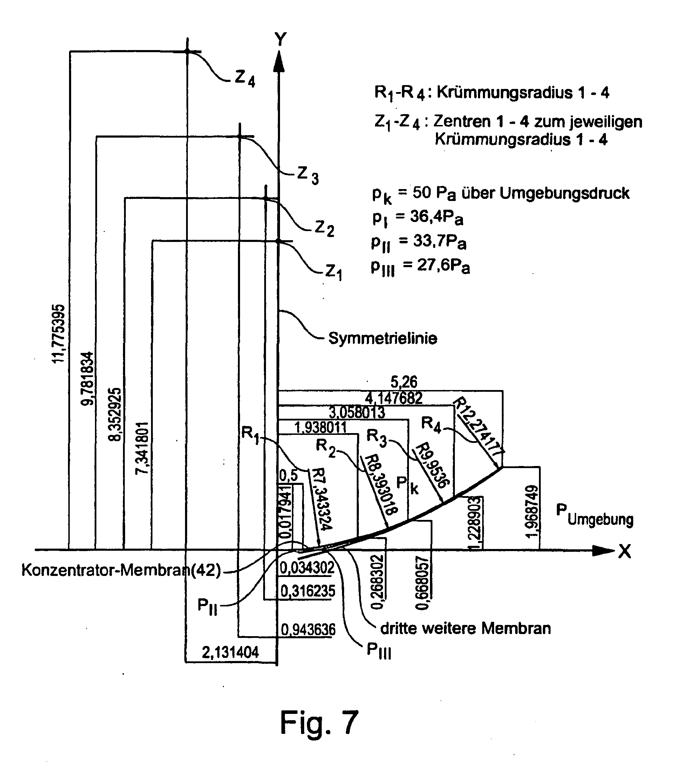

Die Figur 7 zeigt masstabsgetreu, mit der Einheit m, ein Beispiel für einen erfindungsgemässen Rinnenkollektor mit einer Membrananordnung mit 4 Zonen. Der Brennlinienbereich hat die Koordinate $x = 0$, $y = 4$, der Mittelstreifen eine gesamte Breite von 1,0 m, wobei die y Achse in der Symmetrililne liegt.

Wie oben erwähnt, versteht es sich von selbst, dass die erfindungsgemässe Membrananordnung nicht auf die Anwendung in Rinnenkollektoren beschränkt ist. Die oben dargestellten Ausführungsformen sind im Hinblick auf die Verwendung in grossen Solarkraftwerken beschrieben. Genau so gut können jedoch kleinere Kollektoren mit der erfindungsgemässen Membrananordnung bestückt werden; seien dies kleine Rinnenkollektoren oder an Stelle der Rinnenform runde Kollektoren, die einen Brennpunkt bzw. Brennpunktbereich besitzen. Solche Kollektoren werden etwa für Dish-Sterling Systeme verwendet. Ebenso können noch kleinere, runde Sonnenkollektoren mit einem Durchmesser von 1 m oder weniger, mit der erfindungsgemässen Membrananordnung versehen werden, wobei bei solch vergleichsweise kleinen Dimensionen vorzugsweise nur eine erste weitere Membran vorgesehen wird. Die Figuren 4 bis 6b können auch als Querschnittszeichnungen für runde Kollektoren aufgefasst werden, nach welchen der Fachmann ohne weiteres in der Lage ist, erfindungsgemässe Membrananordnungen für runde Kollektoren zu realisieren.

**Patentansprüche**

1. Solarkollektor mit einem Rahmen (47) und einem darin betriebsfähig aufgespannten, als Bestandteil einer Druckzelle ausgebildeten Konzentrator, der eine flexible, unter Betriebsdruckbedingungen betriebsfähig gekrümmte Membrananordnung (41) mit einer Konzentrator-Membran (42) aufweist, **dadurch gekennzeichnet, dass** Mittel vorgesehen sind, um die im Betrieb in der Membrananordnung (41) herrschende, für die Krümmung der Konzentrator-Membran (42) wirksame Linienspannung zu verändern, mindestens einer oder n vorbestimmten Linien (65,66) entlang, derart, dass die dadurch gegebenen Zonen (70,71,72) der Membrananordnung (41) verschieden gekrümmt sind, die Krümmung auch am Ort dieser vorbestimmten Linien (65,66) stetig differenzierbar ist und die Brennpunkt- oder Brennlinienbereiche der verschieden gekrümmten Zonen (70,71,72) im wesentlichen zusammenfallen.

2. Solarkollektor nach Anspruch 1, wobei der Solarkollektor ein Rinnenkollektor ist, dessen Membrananordnung (41) zwei zu einander symmetrisch angeordnete Abschnitte aufweist, wobei die Mittel für jeden Abschnitt der Membrananordnung (41) eine erste weitere Membran (60) aufweisen, die derart aufgespannt ist, dass unter Betriebsdruckbedingungen der jeweilige Abschnitt der Konzentrator-Membran (42) in einem ersten Bereich (63) von seinem äusseren Ende bis hin zu einer ersten vorbestimmten Linie (65) auf der ersten weiteren Membran (60) aufliegt, und wobei letztere gegen einen ersten vorbestimmten Ort unterhalb des inneren Endes der Konzentrator-Membran (42) vorgespannt ist.

3. Rinnenkollektor nach Anspruch 2, wobei die Mittel für jeden Abschnitt der Membrananordnung (41) eine zweite weitere Membran (61) umfassen, die derart aufgespannt ist, dass unter Betriebsdruckbedingungen die Konzentrator-Membran (42) in einem zweiten Bereich (64) von ihrem äusseren Ende bis hin zu einer zweiten vorbestimmten Linie (66) durch die erste weitere Membran (60) hindurch auf der zweiten weiteren Membran (61) aufliegt, wobei letztere gegen einen zweiten vorbestimmten Ort unterhalb des ersten vorbestimmten Orts der ersten weiteren Membran (60) vorgespannt Ist.

4. Rinnenkollektor nach Anspruch 2 oder 3, wobei an einander aufliegende Membranbereiche der Konzentrator-Membran (42) und/oder der weiteren Membrane (60,61) mindestens teilweise mit einander verbunden oder einstückig ausgebildet sind.

5. Rinnenkollektor nach einem oder beiden der Ansprüche 2 oder 3, wobei Spannmittel zum Aufspannen von mindestens einer der weiteren Membrane (60,61) vorgesehen sind, die diese nach der ihr zugeordneten vorbestimmten linie (65,66) erfassen und sie gegen den ihr zugeordneten vorbestimmten Ort vorspannen.

6. Rinnenkollektor nach Anspruch 2, wobei sich die erste weitere Membran (60) über die erste vorbestimmte Linie (65) hinaus und über einen ersten weiteren Bereich (82) nach Innen erstreckt und der zwischen der Konzentrator-Membran (42) und dem ersten weiteren Bereich (82) eingeschlossene Raum fluiddicht als erste Druckkammer (84) ausgebildet ist, und wobei Mittel vorgesehen sind, um in dieser einen ersten Betriebsdruck $p_I$ aufrecht zu erhalten.

7. Rinnenkollektor nach Anspruch 3 oder 6, wobei sich die zweite weitere Membran (61) über die zweite vorbestimmte Linie (66) hinaus über einen zweiten weiteren Bereich (87) nach innen erstreckt und der zwischen der Konzentrator-Membran (42) oder dem ersten weiteren Bereich (82) und dem zweiten weiteren Bereich (87) gebildete Raum fluiddicht als zweite Druckkammer (88) ausgebildet ist, wobei Mittel vorgesehen sind, um in dieser einen zweiten Betriebsdruck $p_{II}$ aufrecht zu erhalten.

8. Rinnenkollektor nach Anspruch 5 und 6, wobei, Spannmittel für die erste weitere Membran (60) vorgesehen sind und sich die zweite weitere Membran (61) über die zweite Belastungs-Mantellinie (66) hinaus in einem zweiten weiteren Bereich (87) nach innen erstreckt und der zwischen der Konzentrator-Membran (42) und dem zweiten weiteren Bereich (87) gebildete Raum flulddicht als Druckkammer ausgebildet ist, wobei Mittel vorgesehen sind, um in dieser einen zweiten Betriebsdruck aufrecht zu erhalten.

9. Solarkollektor nach Anspruch 1, wobei der Solarkollektor ein Rinnenkollektor ist, dessen Konzentrator-Membran (42) zwei zu einander symmetrisch angeordnete Abschnitte aufweist, wobei die Mittel für jeden Abschnitt der Konzentrator-Membran (42) erste Spannmittel aufweisen, die ausgebildet sind, am Ort einer ersten vorbestimmten Linie (65) eine erste Linienspannkraft in die Konzentrator-Membran (42) einzuleiten, und wobei die ersten Spannmittel vorzugweise eine erste Spannmembran (101) aufweisen, die am Ort der ersten vorbestimmten Linie (65) mit der Konzentrator-Membran (42) betriebsfähig verbunden ist und besonders bevorzugt der zwischen der Konzentrator-Membran (42) und der ersten Spannmembran (101) gebildete Raum fluiddicht als erste Druckkammer ausgebildet ist und Mittel vorgesehen sind, um in dieser einen ersten Betriebsdruck $p_I$ aufrecht zu erhalten.

10. Rinnenkollektor nach Anspruch 9, wobei die Mittel für jeden Abschnitt der Konzentrator-Membran (42) zweite Spannmittel aufweisen, die ausgebildet sind, am Ort einer zweiten vorbestimmten Linie (66) eine Unlenspannkraft in die Konzentrator-Membran (42) einzuleiten, und wobei die zweiten Spannmittel vorzugweise eine zweite Spannmembran (102) aufweisen, die am Ort der zweiten vorbestimmten Linie (66) mit der Konzentrator-Membran (42) betriebsfähig verbunden ist und wobei besonders bevorzugt der zwischen der ersten Spannmembran (191) und der zweiten Spannmembran (102) gebildete Raum fluiddicht als zweite Druckkammer ausgebildet ist und Mittel vorgesehen sind, um in dieser einen zweiten Betriebsdruck $p_{II}$ aufrecht zu erhalten.

11. Solarkollektor nach Anspruch 1 mit einer kreisförmigen Konzentrator-Membran, wobei die Mittel eine erste weitere Membran aufweisen, die derart aufgespannt ist, dass unter Betriebsdruckbedingungen die Konzentrator-Membran In einem ersten Bereich von ihrem äusseren Ende bis hin zu einer ersten vorbestimmten Linie auf der ersten weiteren Membran aufliegt, und wobei letztere gegen einen ersten vorbestimmten Ort unterhalb des inneren Endes der Konzentrator-Membran vorgespannt ist.

12. Solarkollektor nach Anspruch 1 mit einer kreisförmigen Konzentrator-Membran, wobei die Mittel erste Spannmittel aufweisen, die ausgebildet sind, am Ort einer ersten vorbestimmten Linie eine erste Linienspannkraft in die Konzentrator-Membran einzuleiten, und wobei die ersten Spannmittel vorzug-5 weise eine erste Spannmembran aufweisen, die am Ort der ersten vorbestimmten Linie mit der Konzentrator-Membran betriebsfähig verbunden ist und besonders bevorzugt der zwischen der Konzentrator-Membran und der ersten Spannmembran gebildete Raum fluiddicht als erste Druckkammer ausgebildet ist und weitere Mittel vorgesehen sind, um in dieser einen ersten Betriebsdruck 10 aufrecht zu erhalten.

13. Solarkollektor nach Anspruch 12, wobei die Mittel für jeden Abschnitt der Konzentrator-Membran zweite Spannmittel aufweisen, die ausgebildet sind, am Ort einer zweiten vorbestimmten Linie eine Linienspannkraft in die Konzentrator-Membran einzuleiten, und wobei die zweiten Spannmittel vorzugweise eine zweite Spannmembran aufweisen, die am Ort der zweiten vorbestimmten Linie mit der Konzentrator-Membran betriebsfähig verbunden ist und wobei besonders bevorzugt der zwischen der ersten Spannmembran und der zweiten Spannmembran gebildete Raum fluiddicht als zweite Druckkammer ausgebildet 20 ist und weitere Mittel vorgesehen sind, um in dieser einen zweiten Betriebsdruck aufrecht zu erhalten.

14. Rinnenkollektor nach einem der Ansprüche 6,7,9 oder 10, wobei die Konzentrator-Membran (42) die Druckzeile (40) fluiddicht durchsetzt und in eine 25 obere Konzentratorkammer (50) für Konzentratordruck und In untere Ausgleichskammer (80) für Ausgleichsdruck teilt, und wobei der Konzentratordruck $p_K$ grösser ist als der erste Betriebsdruck $p_I$, dieser grösser ist als der zweite Betriebsdruck $p_{II}$, welcher seinerseits grösser ist als der Ausgleichsdruck $p_A$, und wobei der Ausgleichsdruck $p_A$ grösser ist als der Aussendruck $p_{Ausen}$. 30

15. Solarkollektor nach Anspruch 1, wobei der Solarkollektor ein Rinnenkollektor ist, der ein Absorberrohr (52) mit einer Aussenisolation, einem inneren Absorberraum und einer in der Aussenisolation vorgesehen Schlitzöffnung (52') für den Durchtritt konzentrierter Sonnenstrahlung in den Absorberraum aufweist, die Brennpunkt- oder Brennlinienbereiche der verschieden gekrümmten Zonen (70,71,72) im Bereich der Schlitzöffnung (52') liegen

16. Verfahren zur Herstellung eines Solarkollektors noch Anspruch 1, **dadurch gekennzeichnet, dass** zur Bestimmung der Krümmung der Konzentrator-Membran (42) in den jeweiligen Zonen (70,71,72) in einem ersten Schritt ausgehend von den Einspannstellen der Konzentrator-Membran (42) im Kollektor und der Position eines Wärmeabsorbers oder eines Absorberrohrs (52), eine durch die Konzentrator-Membran (42) anzunähernde Parabelform definiert wird, wobei die Annäherung durch n+1, vorzugsweise 3 sphärisch gekrümmte Zonen (70,71,72) der Konzentrator-Membran (42) erreicht werden soll und dazu n vorbestimmte Linien (65,66) auf der Parabelform angenommen werden, in einem zweiten Schritt über die Methode der Arcspline-Interpolation eine erste Ausbildung der n+1 sphärisch gekrümmten Zonen (70,71,72) bestimmt wird, in einem dritten Schritt vorzugsweise mit der Methode von Levenberg-Marquardt unter Verschiebung der n vorbestimmten Linien (65,66) die durch die Arcspline- Interpolation gegebenen Fehler in der ersten Ausbildung der n+1 sphärisch gekrümmten Zonen (70,71,72) im Hinblick auf ihre Höhenabweichung gegenüber der anzunähernden Parabelform minimiert werden, so dass eine so erhaltene zweite Ausbildung der n+1 sphärisch gekrümmten Zonen (70,71,72) bestimmt ist, die der anzunähernden Parabelform verbessert angenähert ist.

17. Verfahren nach Anspruch 16, wobei im dritten Schritt vorzugsweise mit der Methode von Levenberg-Marquardt die durch die Arcspline-Interpolation gegebenen Fehler in der ersten Ausbildung der n+1 sphärisch gekrümmten Zonen (70,71,72) im Hinblick auf ihre Steigung bezüglich der anzunähernden Parabelform minimiert werden, so das eine zweite Ausbildung der n+1 sphärisch gekrümmten Zonen (70,71,72) bestimmt ist, die der anzunähernden Parabelform bezüglich der Lage ihrer Brennlinienbereiche verbessert angenähert ist.

18. Verfahren nach Anspruch 16 oder 17, wobei im dritten Schritt vorzugsweise mit der Methode von Levenberg-Marquardt die durch die Arcspline-Interpolation gegebenen Fehler in der ersten Ausbüdung der n+1 sphärisch gekrümmten Zonen (70,71,72) im Hinblick auf ihre Entfernung vom Brennpunkt oder der Brennlinie der anzunähernden Parabelform gewichtet minimiert werden, mit bei weiterer Entfernung wachsendem Gewicht, so das eine zweite Ausbildung der n+1 sphärisch gekrümmten Zonen (70,71,72) bestimmt ist, die der anzunähernden Parabelform bezüglich der minimalen Ausdehnung ihrer Brennlinienbereiche verbessert angenähert ist.

19. Verfahren nach Anspruch 17 und 18, wobei im dritten Schritt die Minimierung der Fehler nach der Steigung und mit wachsender Entfernung vom Brennpunkt oder der Brennlinie der anzunähernden Parabelform stärker gewichtet minimiert werden, so dass eine zweite Ausbildung der n+1 sphärisch gekrümmten Zonen (70,71,72) bestimmt ist, die der anzunähernden Parabelform bezüglich der Lage und der minimalen Ausdehnung ihrer Brennlinienbereiche verbessert angenähert ist.

## Claims

1. A solar collector comprising a frame (47) and a concentrator which is spanned operatively therein and configured as part of a pressure cell, which comprises a flexible membrane arrangement (41) with a concentrator membrane (42), curved operatively under operating pressure conditions, **characterised in that** means are provided for varying the line tension effective for the curvature of the concentrator membrane (42), prevailing during operation in the membrane arrangement (41), along at least one or n predetermined lines (65, 66) in such a manner that the zones (70, 71, 72) of the membrane arrangement (41) thereby given are differently curved, the curvature is continuously differentiable even at the location of these predetermined lines (65, 66) and the focal point or focal line regions of the differently curved zones (70, 71, 72) substantially coincide.

2. The solar collector according to claim 1, whereby it is designed as trough collector, the membrane arrangement (41) whereof comprises two sections disposed symmetrically with respect to one another, wherein the means for each section of the membrane arrangement (41) comprise a first further membrane (60) which is spanned in such a manner that under operating pressure conditions the respective section of the concentrator membrane (42) rests on the first further membrane (60) from its outer end as far as a first predetermined line (65), and wherein the latter is pre-stressed towards a first predetermined location below the inner end of the concentrator membrane (42).

3. The trough collector according to claim 2, wherein the means for each section of the membrane arrangement (41) comprise a second further membrane (61) which is spanned in such a manner that under operating pressure conditions the concentrator membrane (42) rests on the second further membrane (61) in a second region (64) from its outer end as far as a second predetermined line (66) through the first further membrane (60), wherein the latter is pre-stressed towards a second predetermined location below the first predetermined location of the first further membrane (60).

4. The trough collector according to claim 2 or 3, wherein membrane regions of the concentrator membrane (42) and/or the further membranes (60, 61) resting one upon the other are at least partially connected to one another or are configured in one piece.

5. The trough collector according to one or both of claims 2 or 3, wherein clamping means are provided for spanning at least one of the further membranes (60, 61) which grasp these membranes according to the predetermined line (65, 66) allocated thereto and pre-tension said membranes towards the predetermined location allocated thereto.

6. The trough collector according to claim 2, wherein the first further membrane (60) extends beyond the first predetermined line (65) and inwards beyond a first further region (82) and the space enclosed between the concentrator membrane (42) and the first further region (82) is configured in a fluid-tight manner as a first pressure chamber (84), and wherein means are provided for maintaining a first operating pressure $p_l$ in this chamber.

7. The trough collector according to claim 3 or 6, wherein the second further membrane (61) extends beyond the second predetermined line (66) inwards beyond a second further region (87) and the space formed between the concentrator membrane (42) or the first further region (82) and the second further region (87) is configured in a fluid-tight manner as a second pressure chamber (88), wherein means are provided for maintaining a second operating pressure $p_{II}$ in this chamber.

8. The trough collector according to claim 5 or 6, wherein clamping means are provided for the first further membrane (60) and the second further membrane (61) extends inwards beyond the second load surface line (66) in a second further region (87) and the space formed between the concentrator membrane (42) and the second further region (87) is configured in a fluid-tight manner as a pressure chamber in order to maintain a second operating pressure in this chamber.

9. The solar collector according to claim 1, whereby it is designed as trough collector, the concentrator membrane (42) whereof comprises two sections disposed symmetrically with respect to one another, wherein the means for each section of the concentrator membrane (42) comprise first clamping means which are configured to introduce a first line clamping force into the concentrator membrane (42) at the location of a first predetermined line (65) and wherein the first clamping means preferably comprise a first clamping membrane (101) which is operatively connected to the concentrator membrane (42) at the location of the first predetermined line (65) and particularly preferably the space formed between the concentrator membrane (42) and the first clamping membrane (101) is configured in a fluidtight manner as a first pressure chamber and means are provided for maintaining a first operating pressure $p_I$ in this chamber.

10. The trough collector according to claim 9, wherein the means for each section of the concentrator membrane (42) comprise second clamping means which are configured to introduce a line clamping force into the concentrator membrane (42) at the location of a second predetermined line (66) and wherein the second clamping means preferably comprise a second clamping membrane (102) which is operatively connected to the concentrator membrane (42) at the location of the second predetermined line (66) and wherein particularly preferably the space formed between the first clamping membrane (101) and the second clamping membrane (102) is configured in a fluid-tight manner as a second pressure chamber and means are provided for maintaining a second operating pressure $p_{II}$ in this chamber.

11. The solar collector according to claim 1 comprising a circular concentrator membrane, wherein the means comprise a first further membrane which is spanned in such a manner that under operating pressure conditions, the concentrator membrane rests on the first further membrane in a first region from its outer end as far as a first predetermined line and wherein said first further membrane is pre-tensioned towards a first predetermined location below the inner end of the concentrator membrane.

12. The solar collector according to claim 1 comprising a circular concentrator membrane, wherein the means comprise first clamping means which are configured to introduce a first line clamping force into the concentrator membrane at the location of a first predetermined line and wherein the first clamping means preferably comprise a first clamping membrane which is operatively connected to the concentrator membrane at the location of the first predetermined line and particularly preferably the space formed between the concentrator membrane and the first clamping membrane is configured in a fluid-tight manner as a first pressure chamber and further means are provided for maintaining a first operating pressure in this chamber.

13. The solar collector according to claim 12, wherein the means for each section of the concentrator membrane comprise second clamping means which are configured to introduce a line clamping force into the concentrator membrane at the location of a second predetermined line and wherein the second clamping means preferably comprise a second clamping membrane) which is operatively connected to the concentrator membrane at the location of the second predetermined line and wherein particularly preferably the space formed between the first clamping membrane and the second clamping membrane is configured in a fluid-tight manner as a second pressure chamber and further means are provided for maintaining a second operating pressure in this chamber.

14. The trough collector according to any one of claims 6, 7, 9 or 10, wherein the concentrator membrane (42) passes through the pressure cell (40) in a fluid-tight manner and divides it into an upper concentrator chamber (50) for concentrator pressure and into a lower compensating chamber (80) for compensating pressure, and wherein the concentrator pressure $p_k$ is higher than the first operating pressure $p_I$, which is higher than the second operating pressure $p_{II}$ which for its part is higher than the compensating pressure $p_A$ and wherein the compensating pressure $p_A$ is higher than the external pressure $p_{ext}$.

15. The solar collector according to claim 1, whereby it is designed as trough collector, which comprises an absorber tube (52) having an external insulation, an internal absorber chamber and a slitted opening (52') provided in the external insulation for the passage of concentrated solar radiation into the absorber chamber, the focal point or focal line regions of the differently curved zones (70, 71, 72) lying in the region of the slitted opening (52').

16. A method for producing a solar collector according to claim 1, **characterised in that** in order to determine the curvature of the concentrator membrane (42) in the respective zones (70, 71, 72) in a first step, starting from the clamping points of the concentrator membrane (42) in the collector and the position of the heat absorber or an absorber tube (52), a parabolic shape to be approximated by the concentrator membrane (42) is defined, wherein the approximation should be achieved by n + 1, preferably three, spherically curved zones (70, 71, 72) of the concentrator membrane (42) and for this n predetermined lines (65, 66) are assumed on the parabolic shape, in a second step a first configuration of the n + 1 spherically curved zones (70, 71, 72) is determined by means of the arcspline interpolation method, in a third step the errors given by the arcspline interpolation in the first configuration of the n + 1 spherically curved zones (70, 71, 72) are minimised with respect to their height deviation with respect to the parabolic shape to be approximated preferably using the Levenberg-Marquardt method whilst displacing the n predetermined lines (65, 66) so that a second configuration of n + 1 spherically curved zones (70, 71, 72) thus obtained is determined which is an improved approximation to the parabolic shape to be approximated.

17. The method according to claim 16, wherein in the third step using the Levenberg-Marquardt method the errors given by the arcspline interpolation in the first configuration of the n + 1 spherically curved zones (70, 71, 72) are minimised with respect to their slope with respect to the parabolic shape to be approximated so that a second configuration of n + 1 spherically curved zones (70, 71, 72) thus obtained is determined which is an improved approximation to the parabolic shape to be determined with regard to the position of its focal line regions.

18. The method according to claim 16 or 17, wherein in the third step preferably using the Levenberg-Marquardt method step the errors given by the arcspline interpolation in the first configuration of the n + 1 spherically curved zones (70, 71, 72) are minimised with respect to their distance from the focal point or the focal line of the parabolic shape to be approximated with increasing weight with further distance so that a second configuration of n + 1 spherically curved zones (70, 71, 72) thus obtained is determined which is an improved approximation to the parabolic shape to be determined with regard to the minimal extension of its focal line regions.

19. The method according to claim 17 and 18, wherein in the third step the minimisation of the errors is minimised with respect to the slope and more strongly weighted with increasing distance from the focal point or the focal line of the parabolic shape to be approximated so that a second configuration of n + 1 spherically curved zones (70, 71, 72) is determined which is an improved approximation to the parabolic shape to be determined with regard to the position and the minimal extension of its focal line regions.

## Revendications

1. Collecteur solaire avec un cadre (47) et un concentrateur qui y est monté à l'intérieur de manière prêt à fonctionner en tant qu'élément d'une cellule de pression, lequel présente un système de membrane (41) flexible courbé de manière prêt à fonctionner dans des conditions de pression de service avec une membrane de concentrateur (42), **caractérisé en ce que** l'on prévoit des moyens afin de modifier la tension de lignes opérative pour la courbure de la membrane de concentrateur (42) ayant lieu dans le système de membrane (41) lors du fonctionnement le long d'au moins une ou n lignes prédéterminées (65, 66) de manière à ce que les zones (70, 71, 72) ainsi obtenues du système de membrane (41) soient courbées de différentes manières, la courbure pouvant être différenciée de manière continue également à l'emplacement de ces lignes prédéterminées (65, 66) et les zones de point focal ou de ligne focale des différentes zones courbées (70, 71, 72) coïncidant sensiblement.

2. Collecteur solaire selon la revendication 1, le collecteur solaire étant un collecteur en auge dont le système de membrane (41) présente deux parties disposées symétriquement l'une par rapport à l'autre, les moyens pour chaque partie du système de membrane (41) présentant une première autre membrane (60) qui est montée de manière à ce que, dans des conditions de pression de service, la partie respective de la membrane de concentrateur (42) repose dans une première zone (63) depuis son extrémité extérieure jusqu'à une première ligne prédéfinie (65) sur la première autre membrane (60), et moyennant quoi cette dernière est précontrainte contre un premier emplacement prédéterminé en-dessous de l'extrémité intérieure de la membrane de concentrateur (42).

**3.** Collecteur en auge selon la revendication 2, les moyens pour chaque partie du système de membrane (41) comprenant une deuxième autre membrane (61) laquelle est montée de manière à ce que, dans des conditions de pression de service, la membrane de concentrateur (42) repose dans une deuxième zone (64) depuis son extrémité extérieure jusqu'à une deuxième ligne prédéterminée (66) à travers l'autre première membrane (60) sur la deuxième autre membrane (61), moyennant quoi cette dernière est précontrainte contre un deuxième emplacement prédéterminé en-dessous du premier emplacement prédéterminé de la première autre membrane (60).

**4.** Collecteur en auge selon les revendications 2 ou 3, dans lequel des zones de membrane reposant les unes sur les autres de la membrane de concentrateur (42) et/ou de l'autre membrane (60, 61) sont reliées au moins partiellement les unes aux autres ou réalisées d'une seule pièce.

**5.** Collecteur en auge selon l'une des revendications 2 ou 3 ou selon les deux revendications 2 et 3, des moyens de serrage pour monter au moins l'une des autres membranes (60, 61) étant prévus, lesquels saisissent celle-ci selon la ligne prédéterminée (65, 66) qui lui est attribuée et la pré-contraignent contre l'emplacement prédéterminé qui lui est attribué.

**6.** Collecteur en auge selon la revendication 2, la première autre membrane (60) s'étendant au-delà de la première ligne prédéterminée (65) et sur une première autre zone (82) vers l'intérieur, et l'espace enfermé entre la membrane de concentrateur (42) et la première autre zone (82) étant réalisé de manière étanche aux fluides en tant que première chambre sous pression (84), et des moyens étant prévus pour maintenir dans celleci une première pression de service $p_I$.

**7.** Collecteur en auge selon les revendications 3 ou 6, la deuxième autre membrane (61) s'étendant audelà de la deuxième ligne prédéterminée (66) sur une deuxième autre zone (87) vers l'intérieur, et l'espace formé entre la membrane de concentrateur (42) ou la première autre zone (82) et la deuxième autre zone (87) étant réalisé de manière étanche aux fluides en tant que deuxième chambre sous pression (88), des moyens étant prévus pour maintenir dans celle-ci une deuxième pression de service $P_{II}$.

**8.** Collecteur en auge selon les revendications 5 et 6, des moyens de serrage étant prévus pour la première autre membrane (60) et la deuxième autre membrane (61) s'étendant au-delà de la deuxième génératrice de sollicitation (66) jusque dans une deuxième autre zone (87) vers l'intérieur, et l'espace formé entre la membrane de concentrateur (42) et la deuxième autre zone (87) étant réalisé de manière étanche aux fluides en tant que chambre sous pression, des moyens étant prévus pour maintenir dans celle-ci une deuxième pression de service.

**9.** Collecteur solaire selon la revendication 1, le collecteur solaire étant un collecteur en auge dont la membrane de concentrateur (42) présente deux parties disposées symétriquement l'une par rapport à l'autre, les moyens pour chaque partie de la membrane de concentrateur (42) présentant des premiers moyens de serrage lesquels sont réalisés pour induire, à l'emplacement d'une première ligne prédéterminée (65), une première force de tension de ligne dans la membrane de concentrateur (42), et les premiers moyens de serrage présentant de préférence une première membrane de serrage (101) qui est reliée de manière fonctionnelle, à l'emplacement de la première ligne prédéterminée (65), à la membrane de concentrateur (42) et de manière particulièrement préférée, l'espace formé entre la membrane de concentrateur (42) et la première membrane de serrage (101) étant réalisé de manière étanche aux fluides en tant que première chambre sous pression et des moyens étant prévus pour maintenir dans celle-ci une première pression de service $p_I$.

**10.** Collecteur en auge selon la revendication 9, les moyens pour chaque partie de la membrane de concentrateur (42) présentant des deuxièmes moyens de serrage, lesquels sont réalisés pour induire à l'emplacement d'une deuxième ligne prédéterminée (66) une force de tension de ligne dans la membrane de concentrateur (42), et les deuxièmes moyens de serrage présentant de préférence une deuxième membrane de serrage (102), laquelle est reliée de manière fonctionnelle, à l'emplacement de la deuxième ligne prédéterminée (66), à la membrane de concentrateur (42), et moyennant quoi de manière particulièrement préférée l'espace formé entre la première membrane de serrage (191) et la deuxième membrane de serrage (102) est réalisé de manière étanche aux fluides en tant que deuxième chambre sous pression et des moyens étant prévus pour maintenir dans celle-ci une deuxième pression de service $P_{II}$.

**11.** Collecteur solaire selon la revendication 1 avec une membrane de concentrateur de forme circulaire, les moyens présentant une première autre membrane laquelle est montée de manière à ce que, dans des conditions de pression de service, la membrane de concentrateur repose dans une première zone depuis son extrémité extérieure jusqu'à une première ligne prédéterminée sur la première autre membrane, et moyennant quoi cette dernière est précontrainte contre un premier emplacement prédéterminé en-dessous de l'extrémité intérieure de la membrane de concentrateur.

12. Collecteur solaire selon la revendication 1 avec une membrane de concentrateur de forme circulaire, les moyens présentant des premiers moyens de serrage lesquels sont réalisés pour induire, à l'emplacement d'une première ligne prédéterminée, une première force de tension de ligne dans la membrane de concentrateur et moyennant quoi les premiers moyens de serrage présentent de préférence une première membrane de serrage laquelle est reliée de manière fonctionnelle, à l'emplacement de la première ligne prédéterminée, à la membrane de concentrateur, et de manière particulièrement préférée, l'espace formé entre la membrane de concentrateur et la première membrane de serrage étant réalisé de manière étanche aux fluides en tant que première chambre sous pression et d'autres moyens étant prévus pour maintenir dans celle-ci une première pression de service.

13. Collecteur solaire selon la revendication 12, les moyens pour chaque partie de la membrane de concentrateur présentant des deuxièmes moyens de serrage lesquels sont réalisés pour induire, à l'emplacement d'une deuxième ligne prédéterminée, une force de tension de ligne dans la membrane de concentrateur et moyennant quoi les deuxièmes moyens de serrage présentent de préférence une deuxième membrane de serrage laquelle est reliée de manière fonctionnelle, à l'emplacement de la deuxième ligne prédéterminée, à la membrane de concentrateur, et moyennant quoi de manière particulièrement préférée l'espace formé entre la première membrane de serrage et la deuxième membrane de serrage est réalisé de manière étanche aux fluides en tant que deuxième chambre sous pression et d'autres moyens étant prévus pour maintenir dans celle-ci une deuxième pression de service.

14. Collecteur en auge selon l'une des revendications 6, 7, 9 ou 10, dans lequel la membrane de concentrateur (42) traverse de manière étanche aux fluides la cellule de pression (40) et la partage en une chambre de concentrateur supérieure (50) pour une pression de concentrateur et en une chambre d'équilibrage inférieure (80) pour une pression d'équilibrage, et moyennant quoi la pression de concentrateur $p_K$ est supérieure à la première pression de service $p_I$, celle-ci étant supérieure à la deuxième pression de service $P_{II}$ laquelle est quant à elle supérieure à la pression d'équilibrage $p_A$, et moyennant quoi la pression d'équilibrage $p_A$ est supérieure à la pression extérieure $P_{Ausen}$.

15. Collecteur solaire selon la revendication 1, le collecteur solaire étant un collecteur en auge qui présente un tube absorbeur (52) avec une isolation extérieure, un espace absorbeur intérieur et une ouverture en fente (52') prévue dans l'isolation extérieure pour le passage d'un rayonnement solaire concentré dans l'espace absorbeur, les zones de point focal ou de ligne focale des différentes zones courbées (70, 71, 72) se trouvant dans la zone de l'ouverture en fente (52').

16. Procédé pour la fabrication d'un collecteur solaire selon la revendication 1, **caractérisé en ce que**, pour la détermination de la courbure de la membrane de concentrateur (42) dans les zones respectives (70, 71, 72) on définit, dans une première étape, en partant des emplacements de serrage de la membrane de concentrateur (42) dans le collecteur et de la position d'un absorbeur de chaleur ou d'un tube absorbeur (52), une forme de parabole à approximer grâce à la membrane de concentrateur (42), l'approximation devant être atteinte grâce à n+1, de préférence 3 zones (70, 71, 72) courbées de manière sphérique de la membrane de concentrateur (42) et n lignes prédéterminées (65, 66) étant supposées à cet effet sur la forme de parabole, lors d'une deuxième étape, grâce à la méthode d'interpolation Arcspline, une première formation des n+1 zones courbées de manière sphérique (70, 71, 72) étant déterminée, lors d'une troisième étape, de préférence grâce à la méthode de Levenberg-Marquardt en décalant les n lignes (65, 66) prédéterminées, les erreurs survenues suite à l'interpolation Arcspline dans la première formation des n+1 zones courbées de manière sphérique (70, 71, 72) étant minimisées compte tenu de leur écart en hauteur par rapport à la forme de parabole à approximer, de sorte qu'une deuxième formation ainsi obtenue des n+1 zones courbées de manière sphérique (70, 71, 72) est déterminée, laquelle est rapprochée de manière améliorée de la forme de parabole à approximer.

17. Procédé selon la revendication 16, dans lequel, lors de la troisième étape, on minimise de préférence avec la méthode de Levenberg-Marquardt les erreurs résultant de l'interpolation Arcspline dans la première formation des n+1 zones courbées de manière sphérique (70, 71, 72) compte tenu de leur pente en ce qui concerne la forme de parabole à approximer, de sorte qu'une deuxième formation des n+1 zones courbées de manière sphérique (70, 71, 72) est déterminée, laquelle est rapprochée de manière améliorée de la forme de parabole à approximer concernant la position de ses zones de lignes focales.

**18.** Procédé selon les revendications 16 ou 17, dans lequel, lors de la troisième étape, de préférence avec la méthode de Levenberg-Marquardt, les erreurs survenues suite à l'interpolation Arcspline dans la première formation des n+1 zones courbées de manière sphérique (70, 71, 72) sont minimisées de manière pondérée compte tenu de leur distance par rapport au point focal ou à la ligne focale de la forme de parabole à approximer, avec un poids augmentant avec une distance plus grande, de sorte que l'on détermine une deuxième formation des n+1 zones courbées de manière sphérique (70, 71, 72), laquelle est rapprochée de manière améliorée de la forme de parabole à approximer compte tenu de l'étendue minimale de ses zones de lignes focales.

**19.** Procédé selon les revendications 17 et 18, dans lequel, lors de la troisième étape, on minimise avec une pondération plus forte la minimisation des erreurs après la pente et avec l'augmentation de la distance par rapport au point focal ou à la ligne focale de la forme de parabole à approximer, de sorte qu'une deuxième formation des n+1 zones courbées de manière sphérique (70, 71, 72) est déterminée, laquelle est rapprochée de manière améliorée de la forme de parabole à approximer concernant la position et l'étendue minimale de ses zones de lignes focales.

Fig. 1

EP 2 340 402 B1

Fig. 2

Fig. 3

EP 2 340 402 B1

oben
(höher)

innen ← → aussen

unten
(tiefer)

43

40

78

77

47

53

52

$P_{Aussen}$

76

50

75

P

54'

41

74

73

44    45

51    67    70    65    60

68

54

63

42    48

47

64

46

72

61

66

71

Fig. 4

Fig. 5

Fig. 6a

Fig. 6b

$R_1$-$R_4$ : Krümmungsradius 1 - 4

$Z_1$-$Z_4$ : Zentren 1 - 4 zum jeweiligen Krümmungsradius 1 - 4

$p_k$ = 50 $P_a$ über Umgebungsdruck

$p_I$ = 36,4$P_a$

$p_{II}$ = 33,7$P_a$

$p_{III}$ = 27,6$P_a$

Symmetrielinie

Konzentrator-Membran(42)

dritte weitere Membran

Fig. 7

**IN DER BESCHREIBUNG AUFGEFÜHRTE DOKUMENTE**

**In der Beschreibung aufgeführte Patentdokumente**

- US PS4543945 A
- WO 2008037108 A
- CH 0046208